(19) Europäisches Patentamt

European Patent Office

Office européen des brevets

(11) **EP 1 335 603 A2**

(12) **EUROPEAN PATENT APPLICATION**

(43) Date of publication:
**13.08.2003 Bulletin 2003/33**

(51) Int Cl.⁷: **H04N 7/24**

(21) Application number: **03001219.9**

(22) Date of filing: **20.01.2003**

| | |
|---|---|
| (84) Designated Contracting States:<br>**AT BE BG CH CY CZ DE DK EE ES FI FR GB GR HU IE IT LI LU MC NL PT SE SI SK TR**<br>Designated Extension States:<br>**AL LT LV MK RO** | (72) Inventor: **Koyanagi, Masahiko**<br>**Kasuya-gun, Fukuoka-ken 811-2304 (JP)** |
| (30) Priority: **29.01.2002 JP 2002019729** | (74) Representative: **Pautex Schneider, Nicole et al**<br>**Novagraaf Internatinal SA**<br>**25, Avenue du Pailly**<br>**1220 Les Avanchets - Geneva (CH)** |
| (71) Applicant: **MATSUSHITA ELECTRIC INDUSTRIAL CO., LTD.**<br>**Kadoma-shi, Osaka 571-8501 (JP)** | |

(54) **Image processing apparatus and method, decoding device, encoding device and method**

(57) Moving images, of the same content, having different resolutions are divided into a plurality of tiles and encoded tile by tile to generate bit streams. When decoding, the minimum number of tiles necessary to display are acquired and decoded. Further, moving images having a high resolution and those having a low resolution are decoded in parallel. The moving images having a low resolution are enlarged and used for substitution until the decoding of the moving images having a necessary resolution is completed.

Fig. 1

EP 1 335 603 A2

**Description**

The present invention relates to an image processing apparatus for decoding moving images, which are prepared with a plurality of different resolutions, and its related technologies.

In MPEG-4, which is one of the international standard systems for encoding moving images by MPEG (Moving image Experts Group), a feature called "spatial scalability" is defined as a function of effectively handling moving images which are prepared with a plurality of different resolutions.

Spatial scalability indicates a system in which two types of data, one of which is based on a high resolution, and the other of which is based on a low resolution, are prepared for input moving images, and data of high resolution are decoded for display when the network or terminal is in a good state, while data of low resolution are decoded for display when the network or terminal is in a poor state.

In detail, an input image is divided into a high resolution image and a low resolution image by preprocessing at the encoder side.

A low resolution image is encoded by an ordinary MPEG-4 encoding algorithm, and forms a bit stream of VOL0 (Video Object Layer-0).

The VOL0 bit stream is reproduced as a low resolution image by a ordinary decoding algorithm at the decoding side, and is displayed.

On the other hand, a high resolution image is encoded by inter-VOP (Video Object Plane) encoding. There are two cases in the prediction mode, one of which is a case of predicting from a high resolution image, and the other of which is a case of predicting from a low resolution image.

In the case of predicting from the lower resolution image, a scaled-up image is used as a predicted image.

Since the encoded low resolution image is used to encode the high resolution image, both bit streams (VOL0 and VOL1) are requisite for decoding the high resolution image.

When the functional features of spatial scalability is used, an application may be realized, such that normal television signals as low resolution images and high-definition television signals as high resolution images are simultaneously broadcasted and a receiving terminal may select either of them, according to the terminal performance capability.

When said spatial scalability is applied to such cases where a displayed moving image is enlarged and/or moved to show a part of it, or reduced to display the entirety of it, interactively with a viewer, the following problems may occur:

(1)When a high resolution image larger in size than a moving image display area of a display screen on a terminal is to be displayed, it is necessary to decode the high resolution image including pixels which are not displayed on the moving image display area.

Therefore, a problem arises in that an extra decoding process and an extra work memory area are required in vain.

(2)It is necessary to transmit codes of the high resolution image including pixels that are not finally displayed on the moving image display area of the display screen. Therefore, a problem arises in that the bandwidth of the network cannot be effectively utilized.

(3)It is necessary to prepare an exclusive decoder in order to decode the codes generated by using the functional features of spatial scalability. Such exclusive decoders are not widely used, therefore, costs for developing and producing the decoders become another problem.

Herein, there is a need to display a part of a high resolution image on a terminal that is able to display only a lower resolution image. In addition, there is another need for users to change over a high resolution image and a low resolution image according to their preferences.

Japanese Unexamined Patent Application No. Hei-8-130733 is disclosed as a technology to partially respond to such needs.

In Japanese Unexamined Patent Application No. Hei-8-130733, by expanding the spatial scalability of the MPEG-2, which is one of the international standard systems of encoding moving images, and hierarchically encoding and transmitting one or more part areas in an image, a moving image processing apparatus, which is configured so that it is able to select either one of the entire area of lower resolution or part areas of high resolution in response to the preference of the receiver side, is developed.

In detail, the moving image processing apparatus is able to assign part areas of an image that are hierarchically encoded, and writes data (coordinates, original image size, and enlarged image size) corresponding to the assigned areas in the user data area of the bit stream of MPEG-2. In response thereto, the apparatus encodes the upper-leveled layer corresponding thereto.

However, where such a moving image processing apparatus is used for such an application, in which, by an instruction from a terminal user, a displayed moving image is enlarged and/or moved to show a part of it, or reduced to display the entirety of it, interactively with the user, the following problems may occur:

(4)It is necessary to decode a plurality of part images of high resolution including pixels, which are not displayed on the moving image display area, of the display screen.

Therefore, a problem arises in that an extra decoding process and an extra work memory area are required in vain.

(5)It is necessary to transmit codes of a plurality of part images of high resolution including the pixels not displayed on the moving image display area of the display screen of a terminal. For this reason, a problem arises in that the bandwidth of the network cannot be effectively utilized.

(6)In order to decode the codes by using information written in the user data area, an exclusive decoder is required. Therefore, costs for developing and producing the decoders become another problem.

(7)Still, another problem occurs in that a moving image can be enlarged only at several predetermined positions.

Therefore, it is an object of the present invention to provide an image processing apparatus and its related technology, which are able to decrease necessary decoding processes, to effectively utilize the bandwidth of a transmission line, to lower development and production costs, and is able to alter display modes at arbitrary area of a moving image.

An image processing apparatus according to a first aspect of the invention is an image processing apparatus that acquires a moving image, through a transmission line, from an image storage unit for storing encoded moving images of the same content, which are prepared with a plurality of different resolutions, and decodes the acquired moving image.

The image processing apparatus includes a code input unit operable to acquire the moving image from the image storage unit and a decoding unit operable to decode the moving image acquired from the image storage unit.

And, with respect to a moving image of a prescribed resolution among the moving images of the same content, which are prepared with the plurality of different resolutions, respective frames thereof are divided into a plurality of segment areas, and are encoded for each of the segment areas.

With such a configuration, since the respective frames with respect to the moving image of the prescribed resolution are divided into the plurality of segment areas, the code input unit does not acquire entirety of the frames, but is able to acquire a necessary number of the segment areas, which are included in the frames of the moving image.

For this reason, in a case where a part of the respective frames of high resolution moving images, which are larger in size than the moving image display area of a display device, it can be devised that segment areas, which are not to be displayed, are not acquired.

As a result, in comparison with a case where the entire frame is acquired through the transmission line, the bandwidth of the transmission line can be effectively utilized.

In addition, since, with respect to the moving image of the prescribed resolution, the respective frames are divided into the plurality of the segment areas, it is possible to acquire a necessary number of the segment areas from one frame.

Accordingly, in comparison with a case of acquiring the entirety of the frames and decoding the same, the amount of information of a moving image to be acquired and necessary decoding processes can be decreased.

Resultantly, it is possible to decrease memory capacity of an apparatus, reduce costs, and decrease the consumption power thereof.

Further, since, with respect to the moving image of prescribed resolution, the respective frames are divided into the plurality of segment areas, the code input unit is able to acquire a necessary number of the segment areas from one frame. In this case, the number of the segment areas to be acquired from one frame can be limited so that a decoding unit having general performance can decode.

In this case, it is not necessary to use a decoding unit having special performance. The general decoding unit may be used. As a result, development and production costs of the decoding unit can be suppressed.

Further, since, with respect to the moving image of the prescribed resolution, the respective frames are divided into the plurality of the segment areas, the code input unit is able to acquire only the segment areas, which include arbitrary areas of the frame of the moving image to be displayed on the display device.

That is, since the code input unit is able to acquire the arbitrarily selected segment areas from the segment areas that constitute the frame of the moving image, it is possible to display any arbitrary area in the frame of the moving image on the display device.

As a result, if a high resolution moving image and a lower resolution moving image are respectively divided into the segment areas and encoded, it becomes possible to change the display modes (for example, enlargement, reduction, scrolling, etc.) for any arbitrary areas of the moving images.

In an image processing apparatus according to a second aspect of the invention, the code input unit acquires bit streams of a minimum number of the segment areas, which include an area to be displayed on the moving image display area, from the moving images stored in the image storing unit.

With such a configuration, when a part of the respective frames of high resolution moving images, which are larger in size than the moving image display area of a display device, is to be displayed on the moving image display area, only a minimum number of segment areas necessary for display can be acquired.

Accordingly, the bandwidth of the transmission line can be further effectively utilized, and necessary decoding processes can be decreased.

In an image processing apparatus according to a third aspect of the invention, two decoding units are provided, as a first decoding unit and a second decoding unit. The first decoding unit decodes a moving image that is displayed on the moving image display area, and the second decoding unit decodes a moving image of a lower resolution than that of the moving image displayed on the moving image display area.

And, the image processing apparatus is further provided with a resolution converting unit, which, in response to instructions to change the display mode of the moving image presently displayed on the moving image display area, acquires and enlarges a part of an area from each of frames of the moving image of the lower resolution, which is decoded by the second decoding unit.

With such a configuration, the decoding of the moving image of the lower resolution than that of the moving image displayed on the moving image display area of the display unit is simultaneously performed with the decoding of the moving image displayed on the moving image display area.

Accordingly, when instruction for changing the display mode (for example, enlargement, scrolling, etc.) is issued, the segments of the area of the moving images of the lower resolution can be enlarged by the resolution converting unit and displayed on the moving image display area, until when a new moving image, which corresponds to the display mode instruction, is acquired from the image storing unit and is completely decoded to display.

That is, the segments of the area of the moving image of the lower resolution, which is enlarged by the resolution converting unit, substitute the new moving image for a period from the acquisition of the new moving image from the image storing unit to the completion of its decoding.

In addition, when another instruction for changing the display mode (for example, reduction, etc.) is issued, the moving image of the lower resolution can be immediately displayed on the moving image display area.

Resultantly, where any display mode changing instruction is issued, delay time in displaying another image, which is observed by a user, can be remarkably decreased, and the user can be relieved for the waiting time. Convenience of a display terminal including the image processing apparatus can thus be improved.

In an image processing apparatus according to a fourth aspect of the invention, where a display mode changing instruction to enlarge a moving image, which is presently displayed in the moving image display area, is issued, the resolution converting unit acquires a part of an area of each of frames of a decoded moving image from the decoding unit that has decoded the moving image displayed at present, and carries out an enlargement process.

When the enlargement instruction is issued, the code input unit acquires a moving image, which has higher resolution than that of the moving image displayed at present, from the image storage unit.

When the enlargement instruction is issued, the decoding unit that is different from the decoding unit that has decoded the moving image displayed at present decodes the moving image having the higher resolution, which has been acquired by the code input unit.

The image processing apparatus is further provided with an image selecting unit, which, when the enlargement instruction is issued, selects to output the part of the area, to which the enlargement process has been applied by the resolution converting unit, until the decoding of the higher resolution moving image is completed, and, after the higher resolution moving image is completely decoded, selects to output the higher resolution moving image.

With such a configuration, where an enlargement instruction is issued, the part of the area, which is selected by the image selecting unit, can be displayed in the moving image display area of the display device, for a period from the acquisition of the higher resolution moving image from the image storage unit in response to the enlargement instruction to the completion of decoding.

That is, a part of the area of the lower resolution moving image, which has been enlarged by the resolution converting unit, substitutes for the higher resolution moving image, for a period from the acquisition of the higher resolution moving image from the image storage unit in response to the enlargement instruction to the completion of decoding.

As a result, when the enlargement instruction is issued, delay time to display an enlarged moving image can be remarkably decreased, and the user can be relieved for the waiting time. Convenience of a display terminal including the present image processing apparatus can thus be improved.

4

In addition, since the moving images that are divided into the segment areas are stored in the image storage unit, an enlargement process for any area of each of frames of the moving image is possible.

An image processing apparatus according to a fifth aspect of the invention is further provided with an image selecting unit that, when a display mode changing instruction for reducing the moving image displayed at present in the moving image display area is issued, selects a lower resolution moving image, which has been decoded by the decoding unit different from the decoding unit that has decoded the moving image displayed at present, and outputs the same.

When the reduction instruction is issued, unless the moving image that is decoded by the decoding unit differing from the decoding unit that has decoded the moving image displayed at present has the lowest resolution, the code input unit acquires a moving image having a lower resolution than that of the moving image decoded by the different decoding unit from the image storage unit.

When the reduction instruction is issued, the decoding unit, which has decoded the moving image displayed at present, decodes the lower resolution moving image, which has been acquired by the code input unit.

With such a configuration, when the reduction instruction is issued, the lower resolution moving image can be immediately displayed in the moving image display area of the display device.

Resultantly, when the reduction instruction is issued, delay time to display a reduced moving image can be remarkably decreased, and the user can be relieved for the waiting time. Convenience of a display terminal including the present image processing apparatus can thus be improved.

In addition, since the moving images divided into the segment areas are stored in the image storage unit, a reduction process for any area of each of the frames of the moving image is possible.

In an image processing apparatus according to a sixth aspect of the invention, when a display area altering instruction for displaying an area other than an area displayed at present in the moving image display area with the same resolution as that of the moving image displayed at present is issued as the display mode changing instruction, the resolution converting unit acquires a part of an area of each of frames of the decoded moving image, which is an area corresponding to the area specified by the display area altering instruction, from the decoding unit differing from the decoding unit that has decoded the moving image displayed at present, and carried out an enlarging process.

When the display area altering instruction is issued, the code input unit acquires the moving image of the area, specified by the display area altering instruction and having the same resolution as that of the moving image displayed at present, from the image storage unit.

When the display area altering instruction is issued, the decoding unit, used for decoding the moving image displayed at present, decodes the moving image of the specified area, which is acquired by the code input unit.

The image processing apparatus is further provided with an image selecting unit that, when the display area altering instruction is issued, selects the part of the area, which is enlarged by the resolution converting unit, and outputs the same, until the decoding of the moving image of the specified area is completed, and, after the decoding of the moving image of the specified area is completed, selects and outputs the completely decoded moving image.

With such a configuration, when the display area altering instruction (scrolling instruction) is issued, the part of the area, which is selected by the image selecting unit, can be displayed in the moving image display area of the display device for a period from the acquisition of the moving image from the image storage unit, in response to the display area altering instruction, to the completion of decoding.

That is, the part of the area of the lower resolution moving images, which is enlarged by the resolution converting unit, is used for substitution, for a period from the acquisition of the moving image from the image storage unit, in responce to the display area altering instruction, to the completion of decoding.

As a result, when the reduction instruction is issued, delay time to display a reduced moving image can be remarkably decreased, and the user can be relieved for the waiting time. Convenience of a display terminal including the present image processing apparatus can thus be improved.

Further, since the moving images divided into the segment areas are stored in the image storage unit, a display area altering process (scroll) for any area of each of the frames of the moving image is possible.

In an image processing apparatus according to a seventh aspect of the invention, two decoding units described above are provided, and the respective decoding units decode moving images of different resolutions.

The image processing apparatus is further provided with a segment area selecting unit, a resolution converting unit, and an image selecting unit.

When an arbitrarily selected area of respective frames of the moving image stored in the image storage unit is instructed to be displayed in the moving image display area, and a processing amount required to decode the minimum number of the segment areas, which include the arbitrarily selected area, exceeds the processing capacity of the decoding unit, the segment area selecting unit is operable to select a maximum number of segment areas from the minimum number of the segment areas, so that an area displayed in a moving image display area is maximized, and a processing amount required to decode the selected segment area is within the range of a processing capacity of the decoding unit.

The resolution converting unit is operable to acquire a segment corresponding to the arbitrarily selected area included in the part area but not selected by the segment area selecting unit, from a moving image decoded by the decoding unit that is different from the decoding unit for decoding the part area selected by the segment area selecting unit, and convert the part corresponding to the arbitrarily selected area to the same resolution as the resolution of the part area selected by the segment area selecting unit.

The image selecting unit is operable to acquire a part to be displayed in the moving image display area from the decoded part area selected by the segment area selecting unit, and to combine to output the acquired part and the part whose resolution is converted by the resolution converting unit.

The code input unit acquires the part area, which is selected by the part area selecting unit, from the image storage unit.

One of two decoding units decodes the part area, which is selected by the segment area selecting unit and acquired by the code input unit.

With such a configuration, in the case where the arbitrarily selected area of respective frames of the moving image stored in the image storage unit is intended to be displayed in the moving image display area, and even when the processing amount required for decoding of the minimum number of the segment areas, which are included in the arbitrarily selected area, exceeds the processing capacity of the decoding unit, it is possible to substantially display the moving image of the arbitrarily selected area, within the range of the processing capacity of the decoding unit, since the image processing apparatus can utilize the moving image decoded by the other decoding unit,

When the area to be displayed in the moving image is arbitrarily changed, the above-mentioned scheme makes it possible to substantially display the moving image of the arbitrarily selected area to be displayed, within the range of the processing capacity of the decoding unit. Therefore, it is possible to display areas centering on a focusing point.

In an image processing apparatus according to an eighth aspect of the invention, the first decoding unit, which is one of two decoding units, decodes a moving image to be displayed in the moving image display area.The second decoding unit, which is the other of two decoding units, decodes a moving image having a lower resolution than that of the moving image displayed in the moving image display area.

The resolution converting unit acquires and enlarges a part of an area from each of frames of the moving image having the lower resolution, which is decoded by the second decoding unit, in response to a display mode changing instruction for altering the mode of the moving image presently displayed in the moving image display area.

With such a configuration, the moving image having the lower resolution than that of the moving image displayed in the moving image display area of a display device is decoded in parallel to the decoding of the moving image displayed in the moving image display area.

For this reason, where a display mode changing instruction (for example, enlargement, scrolling, etc.) is issued, the part of the area of the lower resolution moving image, which is enlarged by the resolution converting unit, can be displayed in the moving image display area, for a period from the acquisition of the moving image from the image storage unit, in response to the display mode changing instruction, to the completion of decoding thereof.

That is, the part of the area of the lower resolution moving image, which is enlarged by the resolution converting unit, is used for substitution, for a period from the acquisition of the moving image from the image storage unit, in response to the display mode changing instruction, to the completion of decoding thereof.

In addition, where a display mode changing instruction (for example, reduction, etc.) is issued, the lower resolution moving image can be immediately displayed in the moving image display area.

As a result, where the reduction instruction is issued, delay time to display a reduced moving image can be remarkably decreased, and the user can be relieved for the waiting time. Convenience of a display terminal including the present image processing apparatus can thus be improved.

In an image processing apparatus according to a ninth aspect of the invention, the display mode changing instruction is carried out by assigning at least a pixel in the moving image display area, and the display mode of the moving image of the area centering around the assigned pixel is altered, in conjunction with the display mode changing instruction.

With such a configuration, when changing the display mode (for example, enlarging, reducing, scrolling, etc.) of the moving image displayed in the moving image display area of the display device, operations become easy and can be intuitively carried out by a user.

In an image processing apparatus according to a tenth aspect of the invention, a first and a second decoding unit are composed as a single decoding process unit, and the single decoding process unit decodes moving images of different resolutions in a manner of time-sharing.

With such a configuration, it is possible to save power consumption and to suppress part mounting areas.

A decoding device according to an eleventh aspect of the invention acquires a moving image from an image storage unit to store moving images of the same content, which are prepared at a plurality of different resolutions, through a transmission line, and displays the decoded moving image.

The decoding device is provided with a code input unit operable to acquire the moving image from the image storage unit, a decoding unit operable to decode the moving image that is acquired from the image storage unit by the code input unit, and a display unit operable to display the moving image decoded by the decoding unit.

And, with respect to a moving image of a prescribed resolution among the moving images of the same content, which are prepared at the plurality of different resolutions, respective frames are divided into a plurality of segment areas and are encoded for each of the segment areas.

With such a configuration, with respect to the moving image of the prescribed resolution, since the respective frames are divided into the plurality of the segment areas, the code input unit does not acquire the entirety of the frames, but can acquire a necessary number of the segment areas included in the frames of the moving image.

For this reason, when a high resolution image larger in size than a moving image display area of a display screen on a terminal is to be displayed, it may be devised so that the part areas, which are not displayed, are not acquired.

As a result, in comparison with a case where the entirety of the frame is acquired through the transmission line, the bandwidth of the transmission line can be effectively utilized.

In addition, since, with respect to the moving image of the prescribed resolution, the respective frames are divided into the plurality of the segment areas, it is possible to acquire a necessary number of the segment areas from one frame.

Therefore, in comparison with a case of acquiring the entirety of the frame and decoding the same, the amount of information of acquired moving images and decoding process amount can be decreased.

Resultantly, it is possible to reduce the memory capacity of devices, and the costs and power consumption thereof.

Further, since respective frames are divided into the plurality of the segment areas with respect to the moving image of the prescribed resolution, the code input unit is able to acquire a necessary number of the segment areas from one frame. In this case, a decoding unit having general performance may be devised so as to acquire a decodable number of the segment areas from one frame.

As a result, it is not necessary to prepare a decoding unit having special performance. The general decoding unit may be used. Therefore, it is possible to reduce the development and production costs thereof.

Still further, since respective frames are divided into the plurality of the segment areas with respect to the moving image having the prescribed resolution, the code input unit is able to acquire the segment areas including a selected area intended to be displayed in the display unit.

That is, since the code input unit is able to acquire the arbitrarily selected segment areas from the segment areas that constitute the frame of the moving image, it is possible to display the arbitrarily selected area in the frame of the moving image in the display unit.

Accordingly, if a high resolution moving image and a low resolution moving image are divided into the segment areas and encoded, it becomes possible to alter the display mode (for example, enlarge, reduce, scroll, etc.) of an arbitrarily selected area of the moving images.

A decoding device according to a twelfth aspect of the invention is provided with two decoding units, one of which is the first decoding unit, and the other of which is the second unit.

The first decoding unit decodes a moving image displayed in the display unit. The second decoding unit decodes a moving image having a lower resolution than that of the moving image displayed in the display unit.

The decoding device is further provided with a resolution converting unit operable to acquire and enlarge a part of an area from each of frames of the lower resolution moving image, which is decoded by the second decoding unit, in response to a display mode changing instruction for altering the display mode of the moving image displayed at present in the display unit.

With such a configuration, the moving image having the lower resolution than that of the moving image displayed in the display unit is decoded in parallel to the decoding of the moving image displayed in the display unit.

Therefore, where the display mode changing instruction (for example, enlargement, scrolling, etc.) is issued, it is possible to display the part of the area of the lower resolution moving image on the display unit, which is enlarged by the resolution converting unit, for a period from the acquisition of the moving image from the image storage unit, in responce to the display mode changing instruction, to the completion of decoding.

That is, the part of the area of the lower resolution moving image, which is enlarged by the resolution converting unit, is used for substitution for a period from the acquisition of the moving image from the image storage unit, responding to the display mode changing instruction, to the completion of decoding.

Also, where the display mode changing instruction (for example, reduction, etc.) is issued, the lower resolution moving image can be immediately displayed in the display unit.

As a result, where the display mode changing instruction is issued, delay time to display a changed moving image can be remarkably decreased, and the user can be relieved for the waiting time. Convenience of a display terminal including the present image processing apparatus can thus be improved.

A decoding device according to a thirteenth aspect of the invention is provided with two decoding units, each of which decodes moving images having different resolutions.

The decoding device is further provided with a segment area selecting unit, a resolution converting unit, and an image selecting unit.

When an arbitrarily selected area of respective frames of the moving image stored in the image storage unit is instructed to be displayed in the display unit, and a processing amount required to decode the minimum number of the segment areas, which include the arbitrarily selected area, exceeds the processing capacity of the decoding unit, the segment area selecting unit is operable to select a maximum number of segment areas from the minimum number of the segment areas, so that an area displayed in the display unit is maximized, and a processing amount required to decode the selected segment area is within the range of a processing capacity of the decoding unit.

The resolution converting unit is operable to acquire a segment corresponding to the arbitrarily selected area included in the part area but not selected by the segment area selecting unit, from a moving image decoded by the decoding unit that is different from the decoding unit for decoding the part area selected by the segment area selecting unit, and convert the part corresponding to the arbitrarily selected area to the same resolution as the resolution of the part area selected by the segment area selecting unit.

The image selecting unit is operable to acquire a part to be displayed in the moving image display area from the decoded part area selected by the segment area selecting unit, and to combine to output the acquired part and the part whose resolution is converted by the resolution converting unit.

The code input unit acquires the part area selected by the part area selecting unit from the image storage unit.

One of two decoding units decodes the part area, which is selected by the part area selecting unit and is acquired by the code input unit.

With such a configuration, in the case where the arbitrarily selected area of respective frames of the moving image stored in the image storage unit is intended to be displayed in the display unit, and even when the processing amount required for decoding of the minimum number of the segment areas, which are included in the arbitrarily selected area, exceeds the processing capacity of the decoding unit, it is possible to substantially display the moving image of the arbitrarily selected area within the range of the processing capacity of the decoding unit, since the image processing apparatus can utilize the moving image decoded by the other decoding unit.

When the area to be displayed in the moving image is arbitrarily changed, the above-mentioned scheme makes it possible to substantially display the moving image of the arbitrarily selected area to be displayed, within the range of the processing capacity of the decoding unit. Therefore, it is possible to display areas centering on a focusing point.

In a decoding device according to a fourteenth aspect of the invention, the first decoding unit, which is one of two decoding units, decodes a moving image to be displayed in the display unit. The second decoding unit, which is the other of two decoding units, decodes a moving image having a lower resolution than that of the moving image displayed in the display unit.

The resolution converting unit acquires and enlarges a part of an area from each of frames of the lower resolution moving image, which is decoded by the second decoding unit, in response to a display mode changing instruction for altering the display mode of the moving image presently displayed in the display unit.

With such a configuration, the moving image having the lower resolution than that of the moving image displayed in the display unit is decoded in parallel to the decoding of the moving image displayed in the display unit.

For this reason, when a display mode changing instruction (for example, enlargement, scrolling, etc.) is issued, the part of the area of the lower resolution moving image, which is enlarged by the resolution converting unit,, can be displayed in the display unit, for a period from the acquisition of the moving image from the image storage unit, responding to the display mode changing instruction, to the completion of decoding thereof.

That is, the part of the area of the lower resolution moving image, which is enlarged by the resolution converting unit, is used for substitution, for a period from the acquisition of the moving image from the image storage unit, in response to the display mode changing instruction, to the completion of decoding thereof.

In addition, where a display mode changing instruction (for example, reduction, etc.) is issued, the lower resolution moving image can be immediately displayed in the moving image display area.

As a result, where the display mode changing instruction is issued, delay time to display a changed moving image can be remarkably decreased, and the user can be relieved for the waiting time. Convenience of a display terminal including the present image processing apparatus can thus be improved.

An encoding device according to a fifteenth aspect of the invention is provided with a dividing unit operable to divide respective frames of an inputted moving image into a plurality of segment areas, an encoding process unit operable to carry out an encoding process with respect to inputted moving images having a plurality of different resolutions, and an image storage unit operable to store the moving images having the plurality of different resolutions, to which the encoding process is applied.

The encoding process unit carries out the encoding process for each of the segment areas with respect to the moving image divided by the dividing unit.

With such a configuration, since, with respect to the moving image of the prescribed resolution, the respective frames are divided into the plurality of the segment areas, the decoding side does not acquire the entirety of the frame, but can acquire a necessary number of the segment areas included in the frame of the moving image.

Therefore, when a part of the respective frames is displayed in the moving image display area with respect to a moving image having a higher resolution than that of the moving image display area of a display device, the decoding side can be devised so as not to acquire the segment areas that are not displayed.

As a result, in comparison with the case where the entirety of the frame is acquired through a transmission line, the bandwidth of the transmission line can be further effectively utilized.

In addition, since, with respect to the moving image having the prescribed resolution, the respective frames are divided into the plurality of the segment areas, the decoding side is able to acquire a necessary number of the segment areas from one frame.

Therefore, in comparison with the case where the entirety of the frame is acquired, the decoding side is able to decrease the amount of information of acquiring moving image and the amount of decoding.

Resultantly, it is possible to reduce the memory capacity of devices, and the costs and power consumption thereof.

Further, with respect to the moving image of the prescribed resolution, since the respective frames are divided into the plurality of the segment areas, the decoding side is able to acquire a necessary number of the segment areas from one frame. In this case, a decoding device having general performance can be devised so as to acquire a decodable number of the part areas from one frame.

Thereby, no decoding device having any special performance is required, wherein general decoding devices may be utilized. As a result, development and production costs of the decoding devices can be suppressed.

Further, with respect to the moving image having the prescribed resolution, the decoding side is able to acquire the segment areas including an arbitrarily selected area, which is intended to be displayed in the display device, from the frame of the moving image, since the respective frames are divided into the plurality of the segment areas,

That is, it is possible to display the arbitrarily selected area of the frame of the moving image in the display device, since the decoding side is able to acquire arbitrarily selected segment areas of the segment areas that constitute the frame of the moving image.

As a result, if a high resolution moving image and a low resolution moving image are divided into the segment areas and encoded, it becomes possible at the decoding side, to change the display modes (for example, enlarge, reduce, scroll, etc.) of an arbitrarily selected area of these moving images.

In an encoding device according to a sixteenth aspect of the invention, the dividing unit divides the respective frames of the moving image into the segment areas, whose frames have a larger resolution than that of a moving image display area.

With such a configuration, a moving image (that is, a moving image whose resolution is larger than the moving image display area), which has a large amount of information and for which division is particularly high, can be divided.

If the amount of information is large, the load for processing at the decoding side increases, and a wider bandwidth of transmission line is required.

Therefore, if the decoding side is devised so as to acquire a necessary number of segment areas by dividing a moving image whose amount of information is large, the amount of processing can be decreased at the decoding side, and at the same time, general decoding devices can be used. Further, the transmission bandwidth can be effectively utilized.

In an encoding device according to a seventeenth aspect of the invention, a moving image having a resolution that does not exceed a moving image display area, in which the moving image is displayed, is encoded by the encoding process unit without being divided by the dividing unit.

With such a configuration, with respect to the moving image having the resolution that does not exceed the moving image display area, no overhead in a dividing process by the dividing unit is brought about, therefore, the processing load can be decreased as a whole.

In an encoding device according to an eighteenth aspect of the invention, the dividing unit divides respective frames of inputted moving image into the segment areas whose size is equal to that of the moving image display area.

With such a configuration, the decoding side is able to utilize a decoding device, which can decode a single bit stream, wherein it is not necessary to provide a decoding device having a multi-decoding feature.

In an encoding device according to a nineteenth aspect of the invention, the dividing unit divides respective frames of inputted moving image into the segment areas whose size is smaller than that of the moving image display area.

With such a configuration, at the decoding side, it becomes possible to finely assign an area of the moving image that is displayed in the moving image display area of a display device.

Also, at the decoding side, a decoding device having a multi-decoding feature is sufficient to have only a small capacity.

In an encoding device according to a twentieth aspect of the invention, the dividing unit divides respective frames of inputted moving image into the segment areas whose size is one of integral fractions of the size of the moving image display area.

With such a configuration, at the decoding side, it is possible to simplify an algorithm for acquiring and processing the segment areas.

In an encoding device according to a twenty-first aspect of the invention, the dividing unit divides respective frames of a moving image into the segment areas, whose size is equal to the frame size of the moving image having the minimum resolution.

With such a configuration, at the decoding side, an algorithm for acquiring and processing the segment areas can be simplified.

In an encoding device according to a twenty-second aspect of the invention, the segment areas are rectangular, and the dividing unit divides respective frames of inputted moving image into rectangular areas, whose size is predetermined and fixed per resolution.

With such a configuration, an algorithm for dividing by the dividing unit can be simplified.

In an encoding device according to a twenty-third aspect of the invention, the segment areas are rectangular, and the dividing unit divides respective frames of inputted moving image into rectangular areas having different sizes alternately.

With such a configuration, even in the case where a display area in a moving image is arbitrarily changed, the amount of information of rectangular areas (segment areas), which include the display area at any arbitrarily selected position, can be decreased, in comparison with a case where frames are divided into rectangular areas (segment areas) of the same size.

As a result, without lowering the frame rate nor specially preparing a decoding device having more intensive performance than that of general decoding devices, it becomes possible to display any arbitrarily selected area of respective frames of moving images, which are stored in the moving image storage unit.

In an encoding device according to a twenty-fourth aspect of the invention, the encoding system employed in the encoding process unit is in conformity with the MPEG-4 standard.

With such a configuration, it becomes possible to provide an encoding device, which is in conformity with the widely prevailed MPEG-4 standard, wherein an economical effect can be expected.

The above, and other objects, features and advantages of the present invention will become apparent from the following description read in conjunction with the accompanying drawings, in which like reference numerals designate the same elements.

Fig. 1 is a block diagram of an image processing system according to Embodiment 1 of the invention;

Fig.2 is an illustrated example of the same image processing system;

Fig. 3 (a) is a view showing division (s) of a moving image having resolution (a) in the same image processing system;

Fig. 3 (b) is a view showing division (s) of a moving image having resolution (b) in the same image processing system;

Fig. 3 (c) is a view showing division (s) of a moving image having resolution (c) in the same image processing system;

Fig. 4 is a view showing information related to an image in the same image processing system;

Fig. 5 is a view showing a data structure of image management data in the same image processing system;

Fig. 6 is a block diagram showing an image processing unit in the same image processing system;

Fig. 7 (a) is a view showing a process carried out by an image processing unit of the same image processing system;

Fig. 7 (b) is a view showing a process carried out by an image processing unit of the same image processing system;

Fig. 7 (c) is a view showing a process carried out by an image processing unit of the same image processing system;

Fig. 7 (d) is a view showing a process carried out by an image processing unit of the same image processing system;

Fig. 7 (e) is a view showing a process carried out by an image processing unit of the same image processing system;

Fig. 7 (f) is a view showing a process carried out by an image processing unit of the same image processing system;

Fig. 7 (g) is a view showing a process carried out by an image processing unit of the same image processing system;

Fig. 7 (h) is a view showing a process carried out by an image processing unit of the same image processing system;

Fig. 8 is a block diagram of an image processing unit according to Embodiment 2;

Fig. 9 is a view describing a process carried out by the image processing unit;

Fig. 10 (a) is a view showing a moving image having resolution (a) in an image processing system according to Embodiment 3 of the invention;

Fig. 10 (b) is a view showing division (s) of a moving image having resolution (b) in the same image processing system;

Fig. 10 (c) is a view showing division (s) of a moving image having resolution (c) in the same image processing system;

Fig. 11 is a view showing information related to a moving image in the same image processing system;

Fig. 12 is a view describing an amount of decoding process carried out by an image processing unit in the same image processing system;

Hereinafter, a description is given of embodiments of the present invention with reference to the accompanying drawings.

(Embodiment 1)

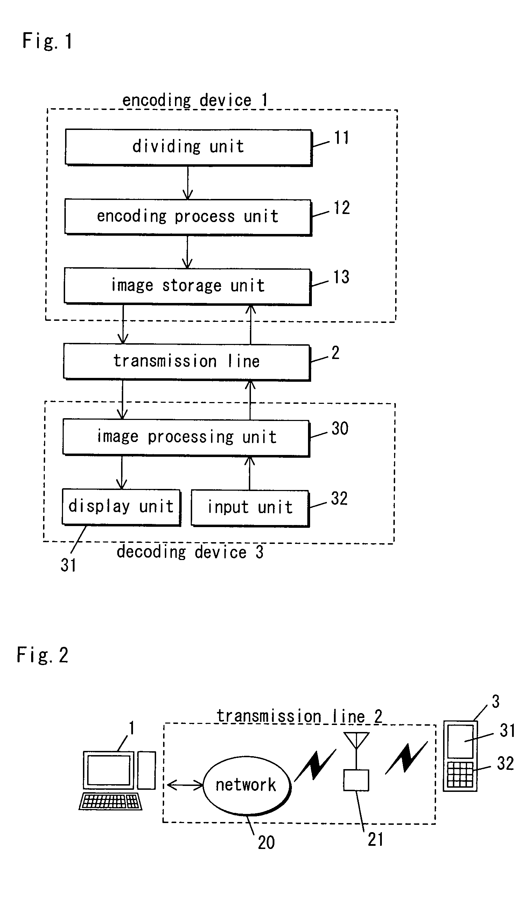

Fig. 1 is a block diagram of an image processing system according to Embodiment 1 of the invention. As shown in Fig. 1, the image processing system is provided with an encoding device 1 and a decoding device 3. The encoding device 1 and decoding device 3 are connected to each other via a transmission line 2.

The encoding device 1 includes a dividing unit 11, an encoding process unit 12, and an image storage unit 13.

The decoding device 3 includes an image processing unit 30, a display unit 31, and an input unit 32.

The dividing unit 11 divides respective frames of an inputted moving image into a plurality of segment areas. Such division is carried out for inputted moving images having different resolutions.

Herein, in the description of the present embodiment, the segment areas are called "tiles", and a description is given of an example in which the tiles are rectangular areas. This is the same in the other embodiments 2 and 3 described later.

The encoding process unit 12 carries out encoding for moving image data having a plurality of different resolutions, which are inputted from the dividing unit 11.

In this case, the encoding process unit 12 carries out encoding tile by tile for moving image data having respective resolutions and prepares a bit stream per tile.

In addition, in the description of the present embodiment, the encoding system of moving images performed by the encoding process unit 12 in Fig. 1 is in compliance with ISO/IEC 14496, that is, the MPEG-4 standard. This is the same in the other Embodiments 2 and 3 described later.

In detail, the encoding process unit 12 encodes respective tiles in compliance with the encoding standard regulated in Simple@L1 Natural Visual Profile (called "Simple@L1 Profile") of the ISO/IEC 14496-2 Visual Part.

The image storage unit 13 stores bit streams generated by the encoding process unit 12, that is, moving image data having a plurality of resolutions, which are encoded by the encoding process unit 12.

For example, the image storage unit 13 is a computer device, which is composed of hard disk drives, memories, an interface circuit with a transmission line 2, a microprocessor, etc. (not illustrated).

The image storage unit 13 transmits information (hereinafter called "image-related information") regarding the stored moving image data and the stored moving image data to the image processing unit 30 via the transmission line 2 upon receiving a request from the image processing unit 30.

The transmission line 2 includes a networking device that connects the image storage unit 13 and image processing unit 30 to each other.

The image processing unit 30 acquires and decodes the encoded moving image data, and outputs the decoded moving image as display data, after performing a necessary image processing on it. Detail of the image processing unit 30 will be described later.

The input unit 32 is an interface device that directly receives instructions from an end user.

The display unit 31 displays display data that are generated and outputted by the image processing unit 30.

Here, the image processing unit 30 may be mounted, for example, in a mobile terminal.

In the present embodiment, a description is given of an example in which the image processing unit 30 is mounted in a mobile telephone. This is the same for the other Embodiments 2 and 3 described later.

Fig. 2 is an illustrated example of the same image processing system shown in Fig. 1. As shown in Fig. 2, as one example of the image processing system shown in Fig. 1, the encoding device 1 is configured as a server, and the decoding device 3 is configured as a mobile telephone.

The transmission line 2 includes a network 20 and a wireless base station 21. Thus, in the example in which the decoding device 3 is configured as a mobile telephone, the transmission line 2 is configured as a wireless communications network for mobile telephones.

In the present embodiment, in the mobile telephone 3, the display unit 31 is equivalent to a liquid crystal display.

In such a case, the liquid crystal display 31 has 128 pixels horizontally and 160 pixels vertically, which can be displayed. The display area of a moving image (that is, moving image display area) of the above area is a range consisting of 128 pixels horizontally and 96 pixels vertically. This is the same for the other Embodiments 2 and 3 described later.

Also, in the present embodiment, in the mobile telephone 3, the input unit 32 corresponds to a plurality of keys (including soft keys, number keys, and cursor keys). This is the same for the other Embodiments 2 and 3 described later.

In Embodiment 1, the types of instructions given by an end user are [Cursor Movement] (using UP, DOWN, LEFT and RIGHT cursor keys), which moves the cursor up, down, left, or right on a displayed moving image, [Scroll] (using Decision key), which moves the moving image at the cursor position to the center of a screen or proximal and displays the same again, [Enlargement] (using Soft Key 1), which enlarges the displayed moving image by one step, and [Reduction] (using Soft Key 2), which reduces the displayed moving image by one step. This is also the same for the other Embodiments 2 and 3 described later.

Next, a detailed description is given of the encoding device 1 shown in Fig. 1, using a detailed example.

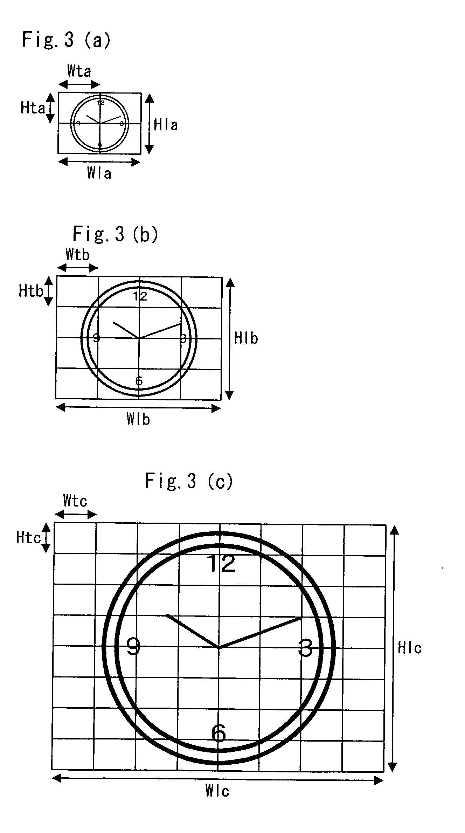

Fig. 3 is a view showing divisions carried out by the dividing unit 11 in Fig. 1. Fig. 3 (a) shows an example, in which a moving image of the lowest resolution (Resolution (a)) is divided into tiles, Fig. 3 (b) shows an example, in which a moving image having an intermediate resolution (Resolution (b)) is divided into tiles, and Fig. 3 (c) shows an example, in which a moving image having the highest resolution (Resolution (c)) is divided into tiles.

Fig. 3 uses three moving images of the same content and the same aspect ratio, but the images have different resolutions.

As shown in Fig. 3 (a), one frame of a moving image of resolution (a) is composed of 128 pixels (W1a) horizontally and 96 pixels (H1a) vertically.

In the moving image of resolution (a), one frame is divided into four tiles by the dividing unit 11. That is, the respective tiles are composed of 64 pixels (Wta) horizontally and 48 pixels (Hta) vertically.

A moving image of resolution (a), in which respective frames are divided into four tiles, is encoded tile by tile by the encoding process unit 12. Then, the four tiles are composed of four encoded bit streams.

As shown in Fig. 3 (b), one frame of a moving image of resolution (b) is composed of 256 pixels (W1b) horizontally and 192 pixels (H1b) vertically.

In the moving image of resolution (b), one frame is divided into 16 tiles by the dividing unit 11. That is, the respective tiles are composed of 64 pixels (Wtb) horizontally and 48 pixels (Htb) vertically.

A moving image of resolution (b), in which respective frames are divided into 16 tiles, is encoded tile by tile by the encoding process unit 12. Then, the 16 tiles are composed of 16 encoded bit streams.

As shown in Fig. 3 (c), one frame of a moving image of resolution (c) is composed of 512 pixels (W1c) horizontally and 384 pixels (H1c) vertically.

In a moving image of resolution (c), one frame is divided into 64 tiles by the dividing unit 11. That is, the respective tiles are composed of 64 pixels (Wtc) horizontally and 48 pixels (Htc) vertically.

A moving image of resolution (c), in which the respective frames are divided into 64 tiles, is encoded tile by tile by the encoding process unit 12. Then, the 64 tiles are composed of 64 encoded bit streams.

As has been easily understood from Fig. 3, the resolution (b) is two times the resolution (a), and the resolution (c) is four times the resolution (a). In addition, in Fig. 3, the tile size is constant in all the resolutions.

As described above, information regarding moving images of respective resolutions is the image-related information.

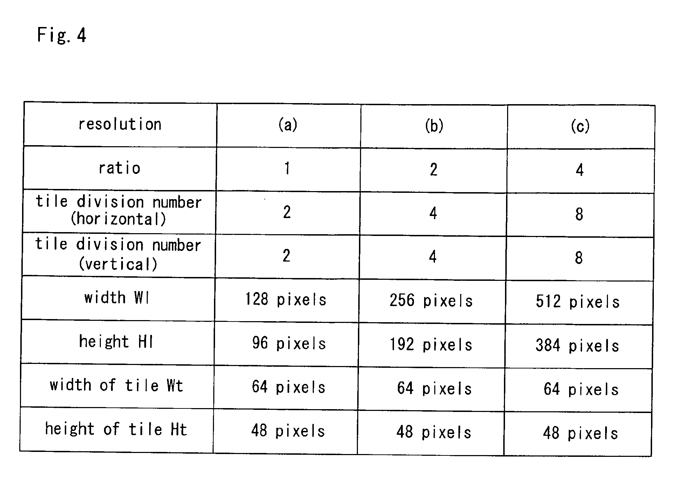

Fig. 4 is table showing image-related information, which the image storage unit 13 in Fig.1 generates. The image-related information shown in Fig. 4 is prepared for the moving images of resolutions (a) through (c) shown in Fig. 3.

In Fig. 4, as regards the moving image of resolution (a), width W1 is W1a (W1=W1a), height H1 is H1a (H1=H1a), tile width Wt is Wta (Wt=Wta), and tile height Ht is Hta (Ht=Hta).

In Fig. 4, as regards the moving image of resolution (b), width W1 is W1b (W1=W1b), height H1 is H1b (H1=H1b), tile width Wt is Wtb (Wt=Wtb), and tile height Ht is Htb (Ht=Htb).

In Fig. 4, as regards the moving image of resolution (c), width W1 is W1c (W1=W1c), height H1 is H1c (H1=H1c), tile width Wt is Wtc (Wt=Wtc), and tile height Ht is Htc (Ht=Htc).

The image storage unit 13 prepares image-related information on the basis of data (hereinafter called "image management data") for managing stored moving image data (bit streams). A detailed description is given of the image-related data.

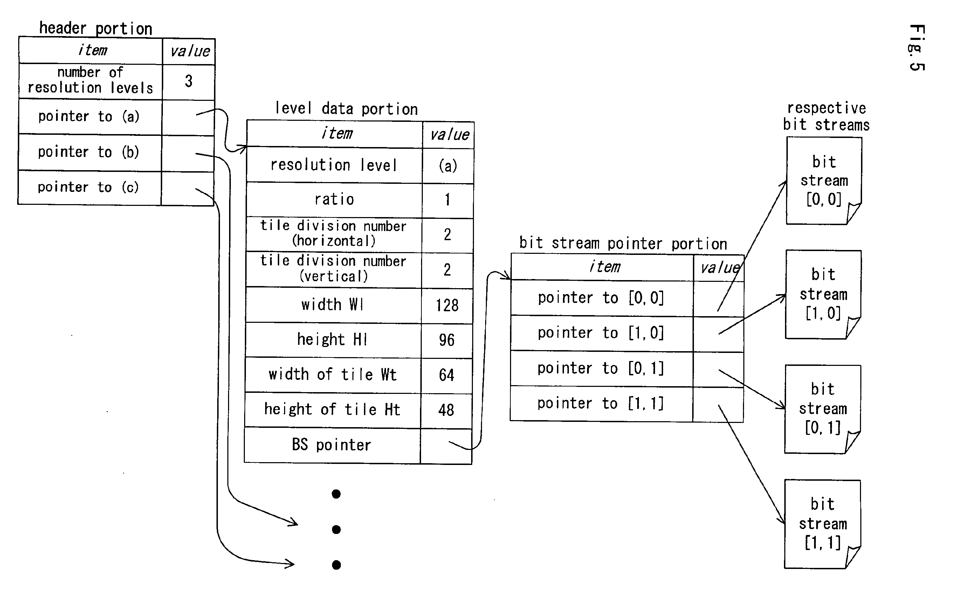

Fig. 5 shows a data structure of the image management data, which the image storage unit 13 in Fig. 1 utilizes.

The data structure shown in Fig. 5 illustrates image management data corresponding to the moving image data of resolutions (a) through (c) in Fig. 3. The image-related information shown in Fig. 4 is prepared on the basis of the image management data in Fig. 5.

As shown in Fig. 5, the image management data are composed of three portions of a header portion, a level data portion and a bit stream pointer portion. Various combinations of items and values are defined in the respective portions.

The header portion is a block that becomes a starting point of a data structure of the image management data. In detail, the header portion is composed of two types of items; one is [Number of resolution levels], showing how many resolution levels are prepared per moving image, and the other is [Pointer to the level data portion], whose number is the same as that of the [Number of resolution levels].

In Fig. 5, to simplify the description, only the level data portion of resolution (a) is described. However, in fact, the level data portions for resolution (b) and resolution (c) exist.

The level data portion has a data structure to retain detailed data of the respective resolution levels. In detail, the level data portion is composed of [Resolution level], showing the corresponding resolution level, [Ratio], expressing the resolution ratio between resolution levels, [Tile division number (horizontal)] and [Tile division number (vertical)], showing how many tiles a moving image of the resolution level is divided into, [Width W1], expressing the number of pixels of a moving image of the resolution level in the horizontal direction, [Height H1], expressing the number of pixels of a moving image of the resolution level in the vertical direction, [Width Wt of tiles], expressing the number of pixels of respective tiles in the horizontal direction, [Height Ht of tiles], expressing the number of pixels of respective tiles in the vertical direction, and [BS pointer], storing pointers to the bit stream pointer portion.

The bit stream pointer portion has an array-shaped data structure that stores pointers to the bit stream per tile.

For example, the data structure becomes a pointer array of 2 x 2 with respect to the resolution level (a).

Respective bit streams are stored, as files, in hard disk drives (not illustrated) that the image storage unit 13 has.

Herein, it is assumed that the positions of respective tiles on a moving image are expressed by [i, j]. In this case, [i] expresses the position of a tile in the horizontal direction, and [j] expresses the position thereof in the vertical direction. On the moving image, the horizontal position of the left upper corner is i=0, and the positions thereof rightward therefrom become 1, 2, ... Also, on the moving image, the vertical position of the left upper corner is j=0, and the positions thereof downward therefrom become 1, 2, ...

For example, as shown in Fig. 3 (a), where a moving image is divided into four tiles, and the tiles are, respectively, encoded into four different bit streams, the position of the left upper tile is expressed to be [0, 0], the position of the left bottom tile is expressed to be [0, 1], the position of the right upper tile is expressed to be [1, 0], and the position of the right bottom tile is expressed to be [1, 1].

The pointer array of the bit stream pointer portion is configured so as to correspond to the positions of the tiles, wherein accessing to a desired bit stream is enabled by subscripts [i, j].

Next, a description is given of a procedure, along which the image storage unit 13 prepares the image-related information, taking Fig. 4 and Fig. 5 as an example.

First, prior to displaying of a moving image, the image processing unit 30 in Fig. 1 provides the image storage unit 13 with a request for transmitting image-related information shown in Fig. 4 (Request of transmitting the image-related information).

Upon receiving the transmission request, the image storage unit 13 constructs image-related information, whose format is as shown in Fig. 4, on the basis of the image management data shown in Fig. 5, and transmits the same to the image processing unit 30.

The image processing unit 30 specifies the resolution level and tile position of a displaying moving image on the basis of the image-related information thus received.

Next, the image processing unit 30 provides the image storage unit 13 with a request for transmitting bit streams corresponding to the specified resolution level and tile position (Request of transmitting the moving image data).

For example, the image processing unit 30 provides the image storage unit 13 a request for transmitting a bit stream of a tile, whose position is [0, 0], with the resolution level (a).

Upon receiving a transmission request, the image storage unit 13 accesses the bit stream, whose position is [0, 0], with the resolution level (a), using a pointer to the bit stream, with reference to the image management data in Fig. 5, and transmits the bit stream of [0, 0] to the image processing unit 30.

The image processing unit 30 decodes the received bit stream of [0, 0] and writes the same in the position corresponding to the position of [0, 0] in a frame memory (not illustrated). This process will be described later.

The moving image data (decoded bit stream) written in the frame memory is displayed at the display position corresponding to the position of [0, 0] in the display unit 31.

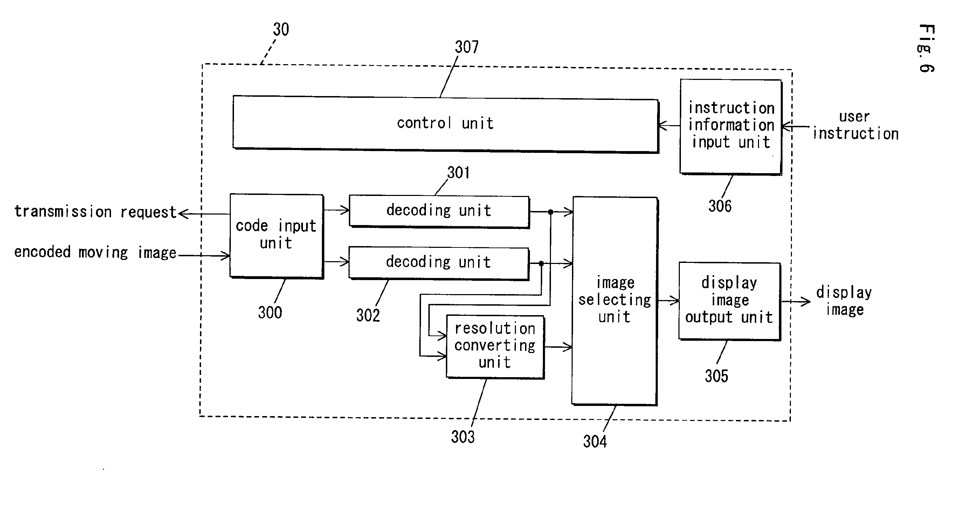

Next, referring to Figs. 1 and 6, a description is given of details of the image processing unit 30 in Fig. 1.

Fig. 6 is a block diagram of the image processing unit 30 in Fig. 1. As shown in Fig. 6, the image processing unit 30 includes code input unit 300, decoding unit 301, decoding unit 302, resolution converting unit 303, image selecting unit 304, display image output unit 305, instruction information input unit 306, and control unit 307.

Hereinafter, a description is given of respective components with reference to Fig. 6 and Fig. 1.

The code input unit 300 is a block that takes a role as an interface with the transmission line 2, which is composed of an antenna, RF (Radio Frequency) processor, base band processor, buffer memory, etc. (Components are not illustrated).

The code input unit 300 provides the image storage unit 13 with a request for transmitting various types of information regarding an stored state of moving images, that is, image-related information (Refer to Fig. 4), in compliance with a control signal from the control unit 307 (Request for transmitting image-related information).

In response to the transmission request, the image storage unit 13 prepares image-related information on the basis of the image management data (Refer to Fig. 5), and transmits the same to the code input unit 300 via the transmission line 2.

The code input unit 300 outputs image-related information transmitted by the image storage unit 13 to the control unit 307.

Also, the code input unit 300 provides the image storage unit 13 with a request for transmitting moving image data via the transmission line 2, in compliance with a control signal from the control unit 307 (Request for transmitting moving image data).

In response to the transmission request, the image storage unit 13 transmits moving image data to the code input unit 300 via the transmission line 2.

Then, the code input unit 300 inputs the moving image data, which are transmitted by the image storage unit 13, one after another, and temporarily retains the same to send them to the decoding units 301 and 302.

Both decoding units 301 and 302 have a decoding function and performance for moving images data, which correspond to the Simple@L1 Profile of the MPEG-4.

That is, the decoding unit 301 is able to decode up to 1485 macroblocks per second. In addition, the decoding unit 301 has a multi-decoding feature, which is able to concurrently decode a plurality of bit streams, within its processing capability.

Similarly, the decoding unit 302 is able to encode up to 1485 macroblocks per second. In addition, the decoding unit 302 has a multi-decoding feature that is able to concurrently decode a plurality of bit streams, within its processing capability.

In detail, the decoding units 301 and 302 are mounted as a single DSP (Digital Signal Processor) that are able to decode 2970 macroblocks per second at maximum.

A single DSP acts in time-sharing and parallel processing mode, as if it is provided with two decoding units.

The decoding unit 301 decodes the moving image data that are outputted by the code input unit 300, and outputs the decoded moving image data to the image selecting unit 304 and resolution converting unit 303, or to the image selecting unit 304.

Similarly, the decoding unit 302 decodes the moving image data outputted by the code input unit 300, and outputs the decode moving image data to the image selecting unit 304 and resolution converting unit 303 or to the image selecting unit 304.

However, the decoding units 301 and 302 decodes moving image data having resolutions different from each other. This process will be described in detail later.

The resolution converting unit 303 picks up a part of an area of respective frames of the moving image decoded by any one of the decoding units 301 and 302.

Then, the resolution converting unit 303 carries out an enlarging process for the part of the area thus picked up, and outputs the same to the image selecting unit 304.

For example, the resolution converting unit 303 picks up an area consisting of 64 pixels in the horizontal direction and 48 pixels in the vertical direction, which corresponds to the right upper tile of [1, 0] from a moving image having a resolution (a) in Fig. 3 (a), which is decoded by the decoding unit 301.

The resolution converting unit 303 enlarges the picked up area, which consists of 64 pixels in the horizontal direction and 48 pixels in the vertical direction, two times in both directions, wherein the same is made into an area consisting of 128 pixels in the horizontal direction and 96 pixels in the vertical direction, and is outputted.

In addition, it is assumed that simple pixel repetition is used for the enlargement algorithm by the resolution converting unit 303.

The image selecting unit 304 selects one of the moving image data that are outputted by the decoding unit 301, decoding unit 302, and resolution converting unit 303, and outputs the same to the display image output unit 305.

In this case, at which timing and which inputted moving image data the image selecting unit 304 selects to output is controlled by the control unit 307, in compliance with an algorithm is described later.

The display image output unit 305 stores moving image data outputted by the image selecting unit 304 and outputs the same to the display unit 31 as display data. Details thereof are explained next.

The display image output unit 305 has two frame memories (not illustrated) facing the screen of the display unit 31 one to one, and periodically outputs the display data to the display unit 31 to the display timing (vertical synchronization and horizontal synchronization timing) of the display unit 31.

The two frame memories have a double-buffer feature, in which, when one frame memory starts to output the stored moving image data as display data to the display unit 31, the other frame memory simultaneously starts to acquire moving image data of the next frame.

Further, the moving image data outputted from the image selecting unit 304 are written in an area (area corresponding to the moving image display area of the display unit 31) for storing the moving image in the frame memories. A cursor, an antenna mark of a mobile telephone, and a battery mark, etc., are written in other areas by the operating system of the mobile telephone.

The instruction information input unit 306 receives user instruction information from the input unit 32 and outputs the same to the control unit 307.

As a first example of user instruction information, there is information (Information for instructing calculation of the cursor movement amount) that provides an instruction so as to calculate the cursor movement amount (dx, dy) from the time when the cursor key is pressed. The user instruction information is outputted to the control unit 307, when a user presses the cursor key.

As a second example of user instruction information, there is information that provides an instruction so as to commence scrolling (Scrolling Instruction Information). The user instruction information is outputted to the control unit 307, when the user presses the decision key.

As a third example of user instruction information, there is information (Enlargement Information) for instructing so as to commence an enlargement process. The user instruction information is outputted to the control unit 307, when the user presses a soft key [1].

As a fourth example of user instruction information, there is information (Reduction Instruction Information) for instructing so as to commence a reduction process. The user instruction information is outputted to the control unit 307, when the user presses a soft key [2].

The above also shows examples of the relationship between the types of user instruction information and keys, and is not limited to the above description.

The control unit 307 has a feature of managing the entire processes of image processing unit 30, and issues control signals or instructions to respective components shown in Fig. 6, in compliance with the algorithm described later, to control the movements of the respective components.

Next, referring to Fig. 1, Fig. 3, Fig. 6 and Fig. 7, a description is given of operations of the image processing unit 30 when instructing enlargement, reduction and scrolling, with reference to detailed examples.

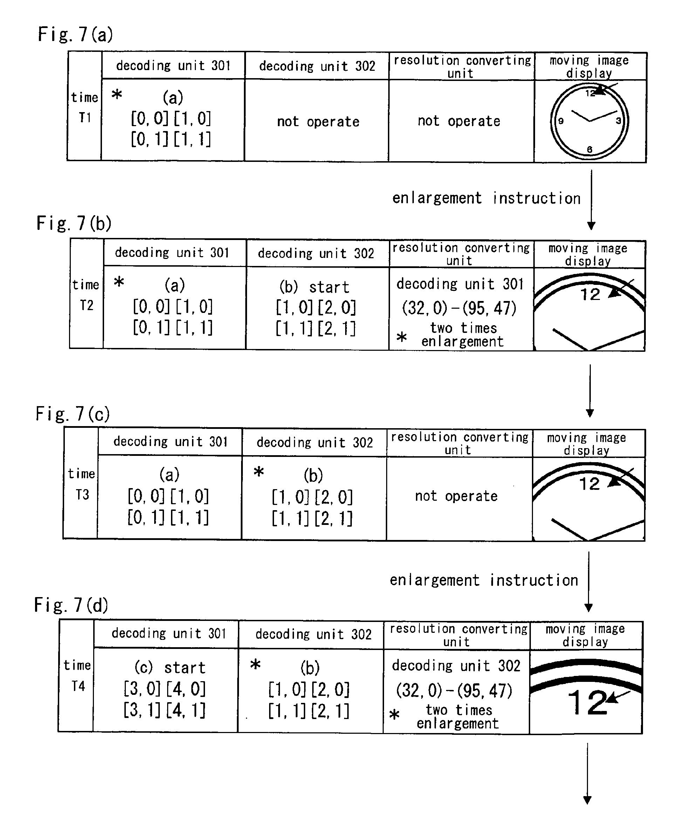

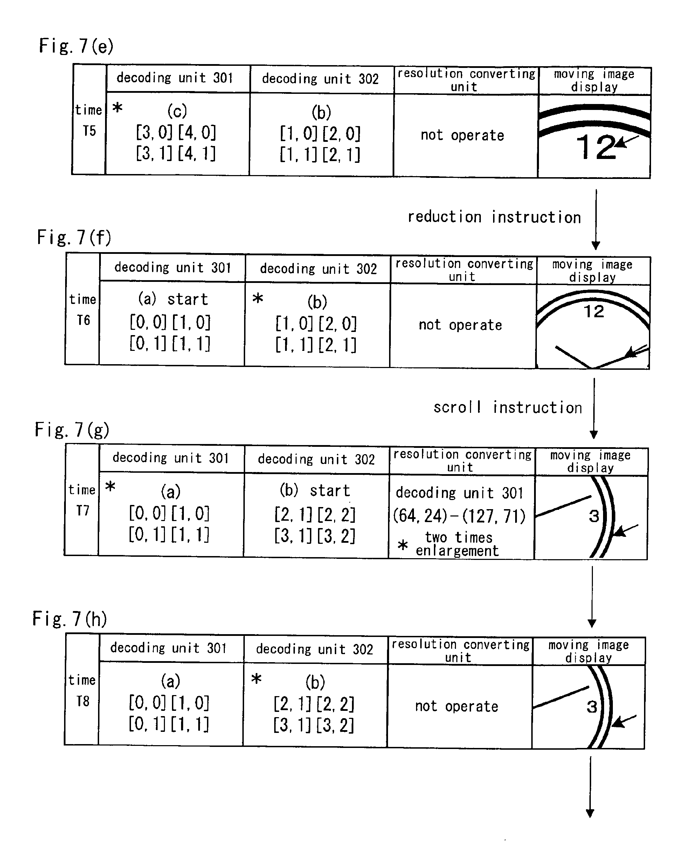

Fig. 7 shows movements of the image processing unit 30 when instructing enlargement, reduction and scrolling.

Fig. 7 (a) is a view describing movements at time T1, Fig. 7 (b) is a view describing movements at time T2, Fig. 7 (c) is a view describing movements at time T3, Fig. 7 (d) is a view describing movements at time T4, Fig. 7 (e) is a view describing movements at time T5, Fig. 7 (f) is a view describing movements at time T6, Fig. 7 (g) is a view describing movements at time T7, and Fig. 7 (h) is a view describing movements at time T8.

That is, Fig. 7 (a) through Fig. 7 (h) are views showing the contents of processes, which are carried out by the decoding unit 301, decoding unit 302 and resolution converting unit 303 at consecutive times T1 through T8, and showing the moving images displayed on the display unit 31 at these times.

In Fig. 7 (a) through Fig. 7 (h), the column of [Decoding Unit 301] indicates at which resolution (a), (b) or (c) the decoding unit 301 decodes a tile at which position.

In Fig. 7 (a) through Fig. 7 (h), the columns of [Decoding Unit 302] indicate at which resolution (a), (b) or (c) the decoding unit 302 decodes a tile at which position.

In the column of [Decoding Unit 301] and column of [Decoding Unit 302], expression of the tile positions is as described above.

In Fig. 7 (a) through Fig. 7 (h), the columns of [Resolution Converting Unit] show which pixel position of the frames of moving images decoded by which one of the decoding unit 301 or 302 the resolution converting unit 303 picks up and how many times it is enlarged.

Also, Fig. 7 shows an example in which the resolution converting unit 303 picks up a rectangular area from the decoded moving images.

In addition, in the columns of [Resolution Converting Unit], expression of the pixel position is as shown below.

It is assumed that the horizontal direction is x axis, the vertical direction is y axis, and the position of a pixel located at the extreme left upper position of a frame of a moving image, which is a target to be picked up by the resolution converting unit 303, is (x, y) = (0, 0).

In this case, the coordinate system is established so that the x coordinate increases in the rightward direction and the y coordinate increases in the downward direction.

In the columns of [Resolution Converting Unit], the coordinates of the left upper point and right lower point of the rectangular area picked up by the resolution converting unit 303 are shown.

In addition, in the example in Fig. 7, it is limited that the rectangular area picked up by the resolution converting unit 303 is enlarged with the aspect ratio being held.

That is, with respect to the picked up rectangular area, the magnification described in the column of [Resolution Converting Unit] is commonly applied to the x and y directions.

In Fig. 7 (a) through Fig. 7 (h), the columns of [Moving image Display] describe moving images that are displayed in the display unit 31 at respective times T1 through T8.

In Fig. 7, the unit corresponding to the column marked with [*] is active and directly related to the display at a specified time.

Further, in the example of Fig. 7, the image storage unit 13 stores moving image data having resolutions (a) through (c) shown in Fig. 3, and the example shows that the image processing unit 30 acquires the data and decodes the same.

Hereinafter, along the flow shown in Fig. 7 (a) through Fig. 7 (h), a description is given of operations of the respective components shown in Fig. 6.

As shown in Fig. 7 (a), it is assumed that the moving image data having resolution (a) are decoded, in advance, by the decoding unit 301 at time T1 and are displayed in the display unit 31. Hereinafter, a detailed description is given of operations at time t1.

Since moving image data having a lower resolution than the resolution (a) are not stored in the image storage unit 13, any decoding process is not carried out by the decoding unit 302 at time T1. Also, the resolution converting unit 303 does not operate.

Therefore, at time T1, the image selecting unit 304 selects the moving image data decoded by only the decoding unit 301 that carries out a decoding process.

Subsequently, the image selecting unit 304 writes the selected moving image data in a frame memory (not illustrated) with which the display image output unit 305 is provided.

Further, the display image output unit 305 is provided with two frame memories as described above.

The display image output unit 305 changes over the two frame memories at adequate timing, and outputs the moving image data, which are stored in the frame memories, to the display unit 31 as display data in synchronization with a video clock.

Thus, a moving image is displayed in the display unit 31 at time T1. At this time, if a user issues an instruction of enlarging and displaying the moving image that is being displayed, the control unit 307 inputs the enlargement instruction information from the instruction information input unit 306.

If so, at time T2, the control unit 307 immediately provides an instruction to the code input unit 300 so that four tiles nearest to the cursor position and having a higher resolution (b) by one step than the displaying resolution (a) are acquired.

The code input unit 300 that receives the instruction provides the image storage unit 13 with a request for transmitting bit streams of the four tiles.

The image storage unit 13 that has received the transmission request transmits the four tile bit streams to the code input unit 300 via the transmission line 2.

And, the code input unit 300 outputs the four tile bit streams of resolution (b), which are acquired from the image storage unit 13, to the decoding unit 302 one after another.

Thus, as shown in Fig. 7 (b), the decoding unit 302 commences a decoding process of the four tile bit streams of resolution (b), which are outputted by the code input unit 300.

On the other hand, at time T2, the control unit 307 provides the resolution converting unit 303 with an instruction of picking up a part of an area of the moving image having resolution (a), which is decoded by the decoding unit 301, and executing an enlargement process to the same resolution as the resolution (b), as soon as the instruction of acquiring the four tiles having resolution (b) is issued to the code input unit 300.

In this case, the area that becomes a target to be picked up is the position corresponding to the newly acquired four tiles of resolution (b), which can be easily obtained in compliance with the ratio of the resolution (a) and resolution (b).

That is, as shown in Fig. 7 (b), the area that becomes a target to be picked up is a rectangular area whose left upper point is (32, 0) and right lower point is (95, 47).

The resolution converting unit 303 picks up the rectangular area, enlarges the area two times in both horizontal and vertical directions, and outputs the same to the image selecting unit 304.

In addition, there may be a case where a moving image generated by enlarging the rectangular area picked up by the resolution converting unit 303 is called [Alternatively enlarged moving image].

Until the bit streams (Moving image data having resolution (b)) of the four tiles having resolution (b) are completely decoded by the decoding unit 302, the image selecting unit 304 selects the alternatively enlarged moving image data outputted by the resolution converting unit 303 and depicts the same in the frame memory of the display image output unit 305.

As a result, at time T2, as shown in Fig. 7 (b), the alternatively enlarged moving image generated by the resolution converting unit 303 is displayed in the display unit 31.

At time T3, as the bit streams (Moving image data having resolution (b)) of the four tiles having resolution (b) are completely decoded by the decoding unit 302, the image selecting unit 304 selects the moving image data having resolution (b), which are decoded by the decoding unit 302, by an instruction from the control unit 307, and outputs the same to the display image output unit 305.

Resultantly, at time T3, as shown in Fig. 7 (c), the moving image having resolution (b), which is decoded by the decoding unit 302, is displayed in the display unit 31.

Further, at time T3, the resolution converting unit 303 terminates the picking up process and enlargement process. However, the decoding unit 301 subsequently decodes the bit streams of the four tiles having resolution (a) continuously.

However, at time T3, since the image selecting unit 304 does not select moving image data having resolution (a), which are decoded by the decoding unit 301, no moving image having resolution (a) is displayed in the display unit 31.

At time T3, if a user provides an instruction for enlarging and displaying a moving image, which is being displayed, again, the control unit 307 inputs the enlargement instruction from the instruction information input unit 306.

Therefore, at time T4, the control unit 307 immediately provides the code input unit 300 with an instruction for acquiring the four tiles nearest to the cursor position and having a higher resolution (c) by one step than the displaying resolution (b).

The code input unit 300 that receives the instruction provides the image storage unit 13 with a request for transmitting bit streams of the four tiles.

The image storage unit 13 that has received the transmission request transmits the bit streams of the four tiles to the code input unit 300 via the transmission line 2.

And, the code input unit 300 outputs the bit streams of the four tiles having resolution (c), which are acquired from the image storage unit 13, to the decoding unit 301 one after another.

Accordingly, as shown in Fig. 7 (d), the decoding unit 301 commences a decoding process of the bit streams of the four tiles having resolution (c), which are outputted by the code input unit 300.

On the other hand, at time T4, the control unit 307 provides the resolution converting unit 303 with an instruction for picking up a part of an area of the moving image having resolution (b), which is decoded by the decoding unit 302, and executing an enlargement process to the same resolution as the resolution (c), as soon as the instruction for acquiring the four tiles having resolution (c) is issued to the code input unit 300.

In this case, the area that becomes a target to be picked up is the position corresponding to the newly acquired four tiles of resolution (c), which can be easily obtained in compliance with the ratio of the resolution (b) and resolution (c).

That is, as shown in Fig. 7 (d), the area that becomes a target to be picked up is a rectangular area whose left upper point is (32, 0) and right lower point is (95, 47).

The resolution converting unit 303 picks up the rectangular area, enlarges the area two times in both horizontal and vertical directions, and output the same to the image selecting unit 304.

Until the bit streams (Moving image data having resolution (c)) of the four tiles having resolution (c) are completely decoded by the decoding unit 301, the image selecting unit 304 selects the alternatively enlarged moving image data outputted by the resolution converting unit 303 and depicts the same in the frame memory of the display image output unit 305.

As a result, at time T4, as shown in Fig. 7 (d), the alternatively enlarged image generated by the resolution converting unit 303 is displayed in the display unit 31.

At time T5, as the bit streams (Moving image data having resolution (c)) of the four tiles having resolution (c) are completely decoded by the decoding unit 301, the image selecting unit 304 selects moving image data having resolution (c), which are decoded by the decoding unit 301, by an instruction from the control unit 307, and outputs the same to the display image output unit 305.

As a result, at time T5, as shown in Fig. 7 (e), the moving image having resolution (c), which is decoded by the decoding unit 301, is displayed in the display unit 31.

Also, at time T5, the resolution converting unit 303 terminates the picking up process and enlargement process. However, the decoding unit 302 subsequently decodes the bit streams of the four tiles having resolution (b) continuously.

However, at time T5, since the image selecting unit 304 does not select moving image data having resolution (b), which are decoded by the decoding unit 302, no moving image having resolution (b) is displayed in the display unit 31.

At time T5, as user provides an instruction for reducing and displaying a moving image which is being displayed, the control unit 307 inputs the reduction instruction information from the instruction information input unit 306.

Therefore, at time T6, the control unit 307 immediately provides the code input unit 300 with an instruction so that it acquires four tiles nearest to the cursor position and having a lower resolution (a) by two steps than the resolution (c), which are being displayed.

The code input unit 300 that has received the instruction provides the image storage unit 13 with a request for transmitting bit streams of the four tiles.

The image storage unit 13 that has received the transmission request transmits the bit streams of the four tiles to the code input unit 300 via the transmission line 2.

And, the code input unit 300 outputs the bit streams of the four tiles having the resolution (a), which are acquired from the image storage unit 13, to the decoding unit 301 one after another.

Then, as shown in Fig. 7 (f), the decoding unit 301 commences to carry out a decoding process of the bit streams of the four tiles having the resolution (a), which are outputted from the code input unit 300.

However, since, at time T6, the image selecting unit 304 does not select the moving image data having the resolution (a), which are decoded by the decoding unit 301, no moving image having the resolution (a) is displayed in the display unit 31.

On the other hand, at time T6, the control unit 307 gives the image selecting unit 304 with an instruction for selecting moving image data having the resolution (b), which are decoded by the decoding unit 302, as soon as the control unit 307 provides the code input unit 300 with an instruction for acquiring the four tiles having the resolution (a).

Then, the image selecting unit 304 selects the moving image data having the resolution (b), which is decoded by the decoding unit 302, and depicts the same in the frame memory of the display image output unit 305.

As a result, at time T6, as shown in Fig. 7 (f), the moving image having the resolution (b), which is decoded by the decoding unit 302, is displayed in the display unit 31.

At this time, if user provides an instruction for scrolling and displaying a moving image to the right lower tile by one tile and displaying it, the control unit 307 inputs the scrolling instruction information from the instruction information input unit 306.

Thereby, at time T7, the control unit 307 immediately provides the code input unit 300 with an instruction for acquiring four tiles nearest to the target portion of scrolling and having the same resolution as that of the resolution (b), which is being displayed.

The code input unit 300 that has received the instruction provides the image storage unit 13 with a request of transmitting bit streams of the four tiles.

The image storage unit 13 that has received the transmission request transmits the bit streams of the four tiles to the code input unit 300 via the transmission line 2.

And, the code input unit 300 outputs the bit streams of the four tiles having the resolution (b), which are acquired from the image storage unit 13, to the decoding unit 302 one after another.

Thereby, as shown in Fig. 7 (g), the decoding unit 302 commences to carry out a decoding process of the bit streams of the four tiles having the resolution (b), which are outputted by the code input unit 300.

On the other hand, at time T7, the control unit 307 picks up a part of an area of the moving image having the resolution (a), which is decoded by the decoding unit 301, for the resolution converting unit 303, as soon as the control unit 307 provides the code input unit 300 with an instruction for acquiring the four tiles having the resolution (b), wherein the control unit 307 provides an instruction for enlarging the same to the same resolution as the resolution (b).

In this case, an area that becomes an object to be picked up is the position corresponding to the four tiles having the resolution (b), which will be newly acquired. It can be easily obtained in compliance with the ratio of the resolution (a) and the resolution (b).

That is, as shown in Fig. 7 (g), the area that becomes an object to be picked up is a rectangular area whose left upper point is (64, 24) and right lower point is (127, 71).

The resolution converting unit 303 picks up the rectangular area, enlarges the same by two times in both horizontal and vertical directions, and outputs the same to the image selecting unit 304.

Until the bit streams (Moving image data having the resolution (b)) of the four tiles having the resolution (b) are completely decoded by the decoding unit 302, the image selecting unit 304 alternatively selects enlarged moving image data outputted by the resolution converting unit 303 and depicts the same in the frame memory of the display image output unit 305.

As a result, at time T7, as shown in Fig. 7 (g), an alternatively enlarged moving image generated by the resolution converting unit 303 is displayed in the display unit 31.

At time T8, as the bit streams (Moving image data having the resolution (b)) of the four tiles having the resolution (b) are completely decoded by the decoding unit 302, the image selecting unit 304 selects the moving image data having the resolution (b), which are decoded by the decoding unit 302, upon receiving instruction from the control unit 307, and outputs the same to the display image output unit 305.

As a result, at time T8, as shown in Fig. 7 (h), the moving image having the resolution (b), which is decoded by the decoding unit 302, is displayed in the display unit 31.

Also, although the resolution converting unit 303 terminates the picking up process and enlargement process at time T8, the decoding unit 301 subsequently decodes the bit streams of the four tiles having the resolution (a).

However, since, at time T8, the image selecting unit 304 does not select moving image data having the resolution (a), which are decoded by the decoding unit 301, no moving image having the resolution (a) is displayed in the display unit 31.

In the above description of Fig. 7, the control unit 307 gives the code input unit 300 with an instruction for acquiring the bit streams of four tiles having a resolution and located in a position, which are specified by the control unit 307, from the image storage unit 13.

Although omitted in the description of Fig. 7, prior to providing the instruction, the control unit 307 acquires image-related information from the image storage unit 13, specifies the resolution and position of the four tiles on the basis of the image-related information and user instruction information, and provides the code input unit 300 with an instruction for acquiring the specified four tiles.

Here, as described above, in the description of Fig. 7, the entirety of one frame consisting of four tiles that are decoded by the decoding units 301 and 302 is made into an area to be displayed in the moving image display area of the display unit 31.

The size (128 pixels in the horizontal direction x 96 pixels in the vertical direction) of the moving image display area of the display unit 31 is made equal to the size (four tiles each being composed of 64 pixels in the horizontal direction and 48 pixels in the vertical direction) of one frame consisting of four tiles decoded by the decoding units 301 and 302.

Here, as described above, in the description of Fig. 7, the size of the tile is a size corresponding to four macroblocks in the horizontal direction and three macroblocks in the vertical direction. Also, the size of one macroblock is 16 pixels by 16 pixels.

And, the decoding units 301 and 302 decode four tiles and display the entirety (one frame) of the four tiles in the moving image display area whose size is equal to the four tiles (one frame).

The decoding capacity of the decoding unit 301 is 1485 (macroblocks per second) regulated in the Simple@L1 Profile. The decoding capacity of the decoding unit 302 is the same as above.

Here, in the present embodiment, it is assumed that the limiting condition of a frame rate of a moving image is 15fps (frames per second) or more.

Therefore, in the present embodiment, the decoding capacity is within the decoding capacity covered by the Simple@L1 Profile. The fact is made clear in Embodiment 2.

Here, as described above, in the present embodiment, respective frames of moving images prepared by the three resolutions (a) through (c) are divided into a plurality of tiles by the dividing unit 11. (See Fig. 3).

Respective tiles are encoded tile by tile by the code input unit 12 to generate a bit stream.

Thus, in the moving images having respective resolution, the respective frames are divided into a plurality of tiles and encoded.

For this reason, the code input unit 300 does not acquire the entirety of the frames, but is able to acquire a necessary number of tiles, which are included in a frame of a moving image.

First, in a case where a part of respective frames is displayed in the moving image display area with respect to the moving image having a higher resolution than that of the moving image display area of the display unit 31, it can be devised that any tile, which is not displayed, is not acquired.

As a result, in comparison with the case where the entirety of the frames are acquired through the transmission line 2, the bandwidth of the transmission line 2 can be effectively utilized.

In particular, in the present embodiment, the code input unit 300 acquires bit streams of a minimum number of tiles (four tiles), including an area to be displayed in the moving image display area of the display unit 31, from the moving image stored in the image storage unit 13.

That is, the code input unit 300 is able to acquire a minimum number of tiles (four tiles) necessary to be displayed in the display unit 31 from the image storage unit 13. For this reason, the bandwidth of the transmission line 2 can be effectively utilized.

Also, the reason why four tiles becomes the minimum number of tiles including the area to be displayed in the moving image display area of the display unit 31 resides in that, in the present embodiment, the entirety of one frame consisting of four tiles is made into an area to be displayed in the moving image display area of the display unit 31, and the size of the moving image display area of the display unit 31 is made equal to the size of one frame consisting of four tiles.

Second, in comparison with the case where the entire frame is acquired and decoded, the amount of information and decoding process amount of a moving image to be acquired can be decreased.

As a result, it is possible to save memories of devices, reduce costs and power consumption thereof.

In particular, since, in the present embodiment, the code input unit 300 acquires the minimum number of tiles (four tiles) necessary to be displayed in the display unit 31 from the image storage unit 13, it is possible to further decrease the amount of information and decoding process amount of moving image to be acquired.

Third, in a case where a necessary number of tiles are acquired from one frame, the code input unit 300 may be devised so that a decoding unit having general performance is able to acquire a decodable number of tiles from one frame.

Then, any decoding unit having special performance or features is not required. Accordingly, it is possible to suppress development and production costs of the decoding unit.

In particular, in the present embodiment, as described above, the code input unit 300 may utilize, for example, a decoder LSI (Large-Scale Integrated Circuit) in compliance to Simple@L1 Profile of MPEG-4 as the decoding units 301 and 302, in order to acquire the minimum number of tiles (four tiles) necessary to be displayed in the display unit 31 from the image storage unit 13.

The decoder LSI in compliance to the Simple@L1 Profile of MPEG-4 widely prevails. In comparison with the case where a decoder exclusive to the spatial scalability feature is utilized, it is possible to produce a terminal device having the features described in the present embodiment at further lower development and mass-production costs.

Fourth, the code input unit 300 is able to acquire tiles including an arbitrarily selected area to be displayed in the display unit 31 of the frames of moving images having respective resolutions.

That is, since the code input unit 300 is able to acquire arbitrarily selected tiles from the tiles that constitute frames of the moving images having respective resolutions, an arbitrarily selected area in the frames of moving images having respective resolutions can be displayed in the display unit 31.

For example, it is possible to acquire four tiles and display the same at any position of the moving image having the resolution (c) shown in Fig. 3 (c).

As a result, it becomes possible to alter the display modes (for example, enlargement, reduction, scrolling, etc.) targeting an arbitrarily selected area of the moving image having respective resolutions (See Fig. 7).

Herein, in the present embodiment, with respect to moving images having resolutions (b) and (c), whose respective frames are larger than that of the moving image display area (size of the four tiles) of the display unit 31, the dividing unit 11 divides the respective frames of the moving image into a plurality of tiles (See Figs. 3 (b) and (c)).

Since a moving image having a high resolution has a greater amount of information, the load of processing at the decoding side is increased, and a larger bandwidth of a transmission line is required, wherein necessity of dividing the frames is particularly increased.

Therefore, if the code input unit 300 is devised by dividing a moving image whose amount of information is large so that it can acquire a necessary number of tiles, the processing amount in the image processing unit 30 can be decreased, and at the same time, general decoding units may be used as the decoding units 301 and 302. The transmission bandwidth can be effectively utilized.

Also, in the present embodiment, the dividing unit 11 divides a moving image having the resolution (a), which is equal to that of the moving image display area of the display unit 31 (Fig. 3 (a)).

However, this is not requisite. With a moving image having the resolution (a) which is equal to that of the moving image display area of the display unit 31, no division is carried out by the dividing unit 11, but the moving image may be directly encoded.

That is, a moving image having the resolution (a) which does not exceed that of the moving image display area of the display unit 31 is not subjected to division by the dividing unit 11, but it may be encoded by the encoding process unit 12.

Thereby, a moving image having the resolution (a) is freed from any overhead due to a dividing process by the dividing unit 11, wherein the processing load is decreased, the searching range of motion estimation by the MPEG-4 is widened, and the image quality and bulk compressibility can be improved.

In addition, the dividing unit 11 may divide respective frames of an inputted moving image into tiles having the same size as that of the moving image display area of the display unit 31.

For example, in the present embodiment, since the moving image display area is composed of 128 pixels horizontally and 96 pixels vertically, the size of one tile may be composed of 128 pixels horizontally and 96 pixels vertically.

Thereby, in the image processing unit 30, it is sufficient to prepare two decoding units, which are able to decode a single bit stream. It is not necessary to prepare any decoding units 301 and 302, which have a multi-decoding function.

In the present embodiment, the dividing unit 11 divides respective frames of a moving image into smaller tiles than the moving image display area of the display unit 31.

For this reason, decoding units 301 and 302 that have a multi-decoding feature are used. However, if such division is carried out, it becomes possible to finely specify areas of a moving image to be displayed in the display unit 31.

For example, in the moving image in Fig. 3 (c), the number of divisions in the horizontal and vertical directions is changed from 8 to 16, the tiles become smaller, and the code input unit 300 can further finely specify the positions of acquired tiles.

Also, in the present embodiment, the dividing unit 11 divides respective frames of moving images having respective resolutions into tiles whose sizes are one of integral fractions of the size of the moving image display area of the display unit 31.

For example, in a moving image having the resolution (a) in Fig. 3, the size of one tile is composed of 64 pixels horizontally and 48 pixels vertically, and the size of the moving image display area is composed of 128 pixels horizontally and 96 pixels vertically, the moving image is divided into tiles whose size is one-half the size of the moving image display area.

Therefore, in the image processing unit 30, an algorithm in acquiring and processing tiles from the image storage unit 13 can be simplified.

Also, the dividing unit 11 may divide respective frames of moving images having resolution other than the moving image having the minimum resolution into tiles whose size is equal to that of the frames of the moving image having the minimum resolution.

In this case, in the image processing unit 30, an algorithm in acquiring and processing tiles from the image storage unit 13 can be simplified.

Further, in the present embodiment, the dividing unit divides respective frames of a moving image into tiles having a fixed size (that is, composed of 64 pixels horizontally and 48 pixels vertically). For this reason, an algorithm of the dividing process by the dividing unit 11 can be simplified.

Also, in the embodiment, although the tile size is fixed in all the resolutions (a) through (c), it is possible to divide respective frames into tiles having different sizes, depending on the resolutions.

In addition, the number of divisions by the dividing unit 11 is not limited to the example shown in Fig. 4, but it may be optionally established.

Still further, in the present embodiment, the above description is based on the case where there are three levels of resolution. The levels are not limited to the above example, but may be established to any optional levels of resolution.

Here, in the present embodiment, two decoding units 301 and 302 are provided, and the moving image having a lower resolution than that of the moving image displayed in the display unit 31 is decoded in parallel to the decoding of the moving image displayed in the display unit 31.

For example, in Fig. 7 (c), the decoding unit 302 decodes the moving image (resolution (b)) displayed in the display unit 31, and the decoding unit 301 decodes moving image having a lower resolution (resolution (a)) by one step than the moving image (resolution (b)) displayed in the display unit 31.

Therefore, where a display mode changing instruction (enlargement instruction or scrolling instruction) is issued, a part of an area (alternatively enlarged moving image) of a moving image having a lower resolution, which is enlarged by the resolution converting unit 303, can be displayed in the display unit 31 from the time of the acquisition of the moving image from the image storage unit 13, responding to the display mode changing instruction (enlargement instruction or scrolling instruction), to the time of the completion of the decoding.

That is, a part of an area (alternatively enlarged moving image) of the moving image having a lower resolution, which is enlarged by the resolution converting unit 303, may be used for substitution from the time of the acquisition of the moving image from the image storage unit 13, responding to the display mode changing instruction (enlargement instruction or scrolling instruction), to the time of the completion of the decoding.

Also, where a display mode changing instruction (reduction instruction) is issued, the moving image which is being displayed is immediately changed to a moving image having a lower resolution, which is decoded by another decoding unit that is not the decoding unit which is decoding the presently displayed moving image, and is displayed in the display unit 31.

As a result, when the reduction instruction is issued, delay time to display a reduced moving image can be remarkably decreased, and the user can be relieved for the waiting time. Convenience of a display terminal including the present image processing apparatus can thus be improved.

If the present invention is embodied by using semiconductor technologies that can be generally utilized as of the Year of 2001, it is possible to display an alternatively enlarged moving image within one or two frames after user instructs enlargement.

Until acquisition, decoding and displaying of new moving image data are completed, several tens of frames are required. In other words, it takes one second to several seconds.

Therefore, where it is assumed that, without employing the configuration shown in the present embodiment, only a single decoding unit is provided and a process responding to a display mode changing instruction (enlargement instruction, scrolling instruction, reduction instruction, etc.) is carried out, a user is obliged to endure such waiting time (one second through several seconds).

Also, in the present embodiment, an alternatively enlarged moving image generated by the resolution converting unit 303 is displayed in the display unit 31, the moving image which is the basis of generating the alternatively enlarged moving image is not said to be a moving image displayed in the display unit 31.

For example, in Fig. 7 (b), at time T3, since the moving image displayed in the display unit 31 is an alternatively enlarged moving image, the moving image (the moving image which becomes the basis of generating an alternatively enlarged moving image) decoded by the decoding unit 301 is not a moving image displayed in the display unit 31. Also, in the embodiment, since the image storage unit 13 stores moving images that are divided into tiles, an enlargement process, reduction process and scrolling process targeting any arbitrarily selected area of frames of the moving image are enabled.

Herein, in the present embodiment, two decoding units 301 and 302 are merely composed as a single DSP, and decode moving images having different resolutions by time-sharing.

For this reason, it is possible to lower the power consumption and to save the part mounting area.

However, use of a single DSP does not limit the scope of the invention at all. Therefore, it is possible to construct the system by physically employing two LSI decoders.

In addition, in the present embodiment, the encoding system using the encoding process unit 12 is made into a system in compliance with the MPEG-4.

Accordingly, it is possible to propose an encoding device 1 matched to the MPEG-4, which is widely utilized, wherein an economical effect can be expected.

However, the encoding system is not limited to MPEG-4, wherein an arbitrary profile and/or an arbitrary encoding system may be used.

Also, if encoded bit streams, which are independent tile by tile, are generated, and the display position of respective bit streams can be controlled by the image processing unit 30, the present invention may be embodied by using any type of encoding system.

Further, in the present embodiment, a mobile telephone is listed as one example of terminal devices to which the image processing unit 30 is applied.

However, a type of terminal to which the image processing unit 30 is applied is not limited to a mobile terminal such as a mobile telephone.

For example, the image processing unit 30 may be applied to a PC (Personal computer), PDA (Personal Digital Assistants), etc.

In the case of a PC, main points of change reside in that the code input unit 300 is composed of hardware centering around a network interface card, the decoding units 301 and 302, resolution converting unit 303, image selecting unit 304 and display image output unit 305 are mounted in a video card, and the input unit 32 is a mouse, etc. However, the functions of the devices do not depart from the scope of the invention at all.

(Embodiment 2)

The entire configuration of an image processing system according to Embodiment 2 of the invention is similar to that of the image processing system shown in Fig. 1. Therefore, in the description of Embodiment 2, Fig. 1 is referred to.

In the description of Embodiment 2, as shown in Fig. 2, an example in which an image processing unit 30 shown in Fig. 1 is mounted in a mobile telephone is also used.

Therefore, in Embodiment 2, the display unit 31 is a liquid crystal display as in Embodiment 1. An example in which the moving image display area is composed of a range consisting of 128 pixels by 96 pixels is taken.

In addition, an example in which moving images having resolutions (a) through (c) shown in Fig. 3 are stored in the image storage unit 13 shown in Fig. 1 is taken.

Further, the limiting condition of the frame rate of the moving image is 15 fps or more. The decoding performance of the decoding unit 301 is 1485 (macroblocks per second), as regulated in Simple@L1 Profile. The decoding performance of the decoding unit 302 is the same as the above.

Hereinafter, a description of parts that are common to those in Embodiment 1 is omitted. Therefore, a description is given mainly of parts that differ from those in Embodiment 1.

Here, in Embodiment 1, the entirety of one frame consisting of four tiles, which are decoded by the decoding units 301 and 302, is displayed in the moving image display area of the display unit 31.

That is, in Embodiment 1, one frame consisting of four tiles, which are decoded by the decoding units 301 and 302, is agreed with an area displayed in the moving image display area of the display unit 31.

In this connection, in Embodiment 1, the entirety of one frame consisting of four tiles, which are decoded by the decoding units 301 and 302, is made into an area displayed in the moving image display area of the display unit 31.

The size of the moving image display area of the display unit 31 is made equal to the size of one frame consisting of four tiles decoded by the decoding units 301 and 302.

In Embodiment 2, it is assumed that such a condition is called a "display condition". Due to the display condition, in Embodiment 1, since the moving image data occupies only four tiles without fail, the processing amount necessary to decode is guaranteed to be definitely held within the range of Simple@L1 Profile. A detailed description is given of this point.

One tile is composed of 12 macroblocks (4 macroblocks (horizontally) x 3 macroblocks (vertically). Therefore, four tiles are composed of 48 macroblocks (12 macroblocks per tile) x 4 (tiles).

Since one frame is composed of four tiles, one frame includes 48 macroblocks.

On the other hand, the decoding capacity that is regulated in Simple@L1 Profile is 1485 (macroblocks per second).

Therefore, the number of frames that can be processed per unit time by the decoding capacity becomes 1485 (macroblocks per second) x 48 (macroblocks per frame).

That is, the number of frames that can be processed per unit time by the decoding capacity becomes approx. 30.9 (30.9fps).

Thus, in Embodiment 1, by said condition, it is guaranteed that the processing amount necessary to decode is definitely held within the range of Simple@L1 Profile.

However, there are cases where the display condition forces inconvenience on the user. In order to solve this, in Embodiment 2, enlargement, reduction, and scrolling can be carried out, centering on a point, arbitrarily assigned by the user.

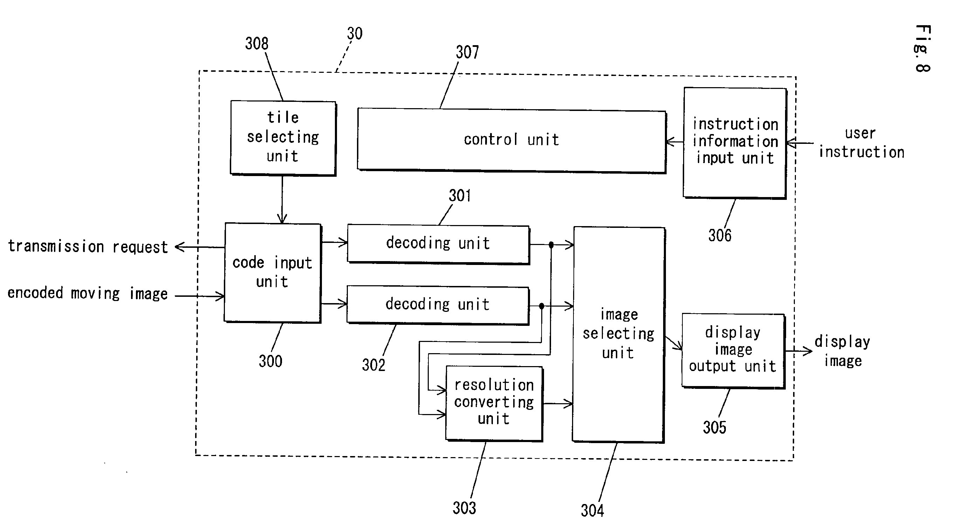

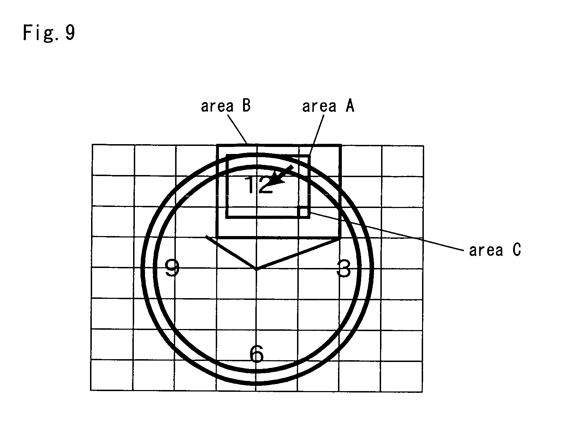

A description is given of this issue, with reference to Fig. 8 and Fig. 9.

Fig. 8 is a block diagram of an image processing unit 30 in Fig. 1 in Embodiment 2 of the invention. Also, in Fig. 8, parts which are similar to those in Fig. 6 are given the same reference numbers, and description thereof may be appropriately omitted.

As shown in Fig. 8, the image processing unit 30 includes a tile selecting unit 308 in addition to the configuration of the image processing unit shown in Fig. 6. The operations thereof will be described later.

Fig. 9 is an example of illustrating a moving image to describe the processing made by the image processing unit 30 in Fig. 8. The moving image shown in Fig. 9 is the same as the moving image having the resolution (c) shown in Fig. 3 (c).

As shown in Fig. 9, it is assumed that area A of the moving image having the resolution (c) is an area to be intended to be displayed in the display unit 31.

A combination of tiles included in the area A and those partially including the area A is made into area B. In other words, the area B is an area consisting of a minimum number of tiles including the area A.

Then, the area B is composed of nine tiles in total. Herein, if the processing amount necessary to decode the nine tiles can be calculated, as shown below, on the basis of the number of macroblocks. It is assumed that the nine tiles constitute one frame.

One tile is composed of 12 macroblocks (4 (horizontally) x 3 (vertically)). Therefore, the nine tiles are composed of 108 macroblocks (12 (macroblocks per tile) x nine (tiles)).

Since one frame is composed of nine tiles, 108 macroblocks are included in one frame.

On the other hand, the decoding capacity that is regulated by Simple@L1 Profile is 1485 (macroblocks per second).

Therefore, the number of frames that can be decoded per unit time by the decoding capacity is 1485 (macroblocks per second)/108 (macroblocks per frame).

That is, the number of frames that can be decoded per unit time by the decoding capacity is 13.75 frames (13.75fps).

Based thereon, it is understood that the decoding capacity regulated by Simple@L1 Profile is slightly insufficient in terms of processing the nine tiles in 15fps.

Therefore, although it may be possible that the display frame rate is deceased in order to enable display of an arbitrarily selected area in a moving image, another approach is taken in Embodiment 2.

The upper limit of the number of tiles that can be decoded under the limiting condition of 15 fps can be obtained by the following expression.

[Expression 1]

$$1485 \text{ [macroblocks/s] } / (4 \times 3) \text{ [macroblocks/tile] } /15 \text{ [fps]}$$

$$= 8.25 \text{ [tiles]}$$

As is made clear by Expression 1, it is understood that 8 tiles are decoded by using the decoding units 301 and 302, which are in compliance with Simple@L1 Profile.

Accordingly, the following processing is carried out in the present embodiment.

One decoding unit is subjected to decode 8 tiles of the nine tiles, and a tile having the smallest display area (that is, a tile including Area C in Fig. 9) is not decoded.

Instead, an area corresponding to the area C is acquired from the moving image having a lower resolution by one step, which is decoded by the other decoding unit, wherein a moving image obtained by enlarging the acquired area is used to substitute the display in the area C.

A detailed description is given of the point with reference to Fig. 8, using Fig. 9 as an example.

In this case, the decoding unit 301 decodes a moving image having the resolution (c) while the decoding unit 302 decodes a moving image having a lower resolution (b) by one step than the resolution (c).

Also, it is assumed that the area A of the moving image shown in Fig. 9 is made into an area to be intended to be displayed in the display unit 31. If so, the nine tiles (area B) are required to display the area A.

As described above, since the respective decoding capacities of the decoding units 301 and 302 are 1485 (macroblock per second), the limit condition of 15 fps cannot be satisfied to decode the nine tiles.

That is, the processing amount to decode the nine tiles exceeds the decoding capacities of the decoding units 301 and 302.

Accordingly, the tile selecting unit 308 selects tiles so that the area displayed in the moving image display area of the display unit 31 is maximized, the processing amount necessary to decode is within the range of the processing capacity of the decoding unit 301, and the number of tiles is maximized. Detailed selection is as follows.

Focusing attention on the nine tiles in the area B, it is assumed that the horizontal direction is made into [line], and the vertical direction is made into [column].

If the nine tiles in the area B are arranged in order of largeness of the areas displayed in the moving image display area of the display unit 31, the arrangement thereof becomes the tile at the second line of the second column, tile at the second line of the first column, tile at the first line of the second column, tile at the first line of the first column, tile at the third line of the second column, tile at the third line of the first column, tile at the second line of the third column, tile at the first line of the third column, and the tile at the third line of the third column.

And, as described above, it is possible to decode eight tiles by the decoding units 301 and 302 at maximum.

Therefore, the tiles that satisfy the conditions of the area displayed in the moving image display area of the display unit 31 being the largest, the decoding amount required to decode being within the range of the decoding capacity of the decoding unit 301, and the number of tiles being maximum are eight tiles excluding the tile at the third line of the third column (tile including the area C) of the nine tiles in the area B.

Based on the above result, the tile selecting unit 308 selects eight tiles excluding the tile including the area C.

The tile selecting unit 308 provides the code input unit 300 with an instruction of acquiring the selected eight tiles from the image storage unit 13.

The code input unit 300 acquires the eight tiles selected by the tile selecting unit 308 from the image storage unit 13, and outputs the same to the decoding unit 301.

The decoding unit 301 decodes the eight tiles outputted by the code input unit 300 and outputs the same to the image selecting unit 304.

In order to display the entirety of the area A in the display unit 31, it is not sufficient to only decode the eight tiles selected by the tile selecting unit 308, wherein the area C is not displayed.

Therefore, as soon as an instruction is issued to the code input unit 300 to acquire the eight tiles, the tile selecting unit 308 picks up an area at the position corresponding to the area C of the moving image having the resolution (c) from respective frames of the moving image having the resolution (b), which are decoded by the decoding unit 302, and gives an instruction of enlarging to the same resolution as the resolution (c).

The picked up area is rectangular because the area C is rectangular. The resolution converting unit 303 enlarges the rectangular area by two times in both the horizontal and vertical directions, and outputs the same to the image selecting unit 304.

There may be cases where the moving image generated through enlargement of the picked up rectangular area by the resolution converting unit 303 is called an "alternatively enlarged moving image".

The image selecting unit 304 picks up only an area necessary for display from the eight tiles decoded by the decoding unit 301.

The image selecting unit 304 combines (synthesizes) the picked up area with the alternatively enlarged moving image generated by the resolution converting unit.

The image selecting unit 304 outputs the combined moving image data to the display image output unit 305, whereby the entirety of the area A can be substantially displayed in the display unit 31.

In the moving image in Fig. 9, in not only the case where the area intended to be displayed is made into the area A, but also the case where the area intended to be displayed is arbitrarily changed, said processing is carried out, and an arbitrarily selected area in the moving image can be substantially displayed in the display unit 31 in the range of the processing capacities of the decoding units 301 and 302.

Thus, an area consisting of 128 pixels by 96 pixels centering around the focused point (pixels (focused pixels) assigned by the cursor) becomes the display area, wherein a moving image can be intuitively enlarged, reduced and scrolled by easy operations carried out by a user.

Also, in the example, if the decoding unit 301 decodes a moving image having the resolution (c) and the decoding unit 302 decodes a moving image having a lower resolution (b) by one step than the resolution (c), the eight tiles are decoded by the decoding unit 302, and the resolution converting unit 303 generates an alternatively enlarged moving image from the moving image decoded by the decoding unit 301.

Now, as described above, in the present embodiment, if the processing amount necessary to decode a minimum number of tiles (in the example shown in Fig. 9, nine tiles) including an arbitrarily selected area exceeds the capacities (in the example in Fig. 9, the eight tiles can be processed) of the decoding units 301 and 302 in the case where the arbitrarily selected area (for example, area A in Fig. 9) of the respective frames of the moving image stored in the image storage unit 13 is intended to be displayed in the display unit 31, one of the decoding units 301 and 302 carries out the decoding in the range of the processing capacity (in the example in Fig. 9, the eight tiles are decoded).

And, a moving image (alternatively enlarged moving image) obtained by enlarging a part of an area of the moving image having a lower resolution, which is decoded by the other of the decoding units 301 and 302, is utilized as substitute of the tiles (in the example in Fig. 9, one tile), which are not decoded, of the minimum number of tiles including the arbitrarily selected area.

Based on the above result, even in the case where an area intended to be displayed, of the moving image is arbitrarily changed, it becomes substantially possible to display the moving image of an arbitrarily selected area intended to be displayed within the range of the processing capacities of the decoding units 301 and 302.

Therefore, display of the range centering on the focused point is enabled, and enlargement, reduction, or scrolling centering on the focused point is enabled.

For this reason, when enlarging, reducing or scrolling the moving image displayed in the display unit 31, the operation can be carried out by a user easily and intuitively.

Further, in the present invention, the dividing unit 11 divides respective frames of the moving images having resolutions (b) and (c) into smaller tiles than the moving image display area (128 pixels horizontally x 96 pixels vertically) of the display unit 31. (See Fig. 4).

For this reason, the area of the moving image displayed in the display unit 31 can be assigned in detail.

Accordingly, if the decoding units 301 and 302 have a multi-decoding function, the decoding unit having a smaller capacity than that of the above may be employed. A detailed description is given of this point.

In a case where an arbitrarily selected area of respective frames of the moving image stored in the image storage unit 13 is intended to be displayed in the moving image display area of the display unit 31, there is a case where the area of the minimum number of tiles including the arbitrarily selected area is larger than the area of the moving image display area.

Herein, in order to simplify the description, it is assumed that all the tiles including the arbitrarily selected area are decoded.

In this case, if the area of a tile is large, the portion (other than the arbitrarily selected area) which is not necessary for display is increased as a matter of course. A decoding unit having a multi-decoding function is required to have a large capacity.

However, if the tile area is small, the area of a portion (portion other than the arbitrarily selected area) which is not necessary for display is decreased as a matter of course. If a decoding unit has a multi-decoding function, only a small capacity is made sufficient.

In the present embodiment, where the processing amount necessary to decode all the tiles including the arbitrarily selected area exceeds the processing capacities of the decoding units 301 and 302, all the tiles including the arbitrarily selected area are not acquired and decoded, wherein tiles existing within the range of the processing capacity are acquired and decoded. However, even in this case, the tiles subjected to the decoding include unnecessary portions for display.

Therefore, even in this case, if the tiles are small as in the above case, the area of portions not necessary for display is decreased as a matter of course. If the decoding units 301 and 302 have a multi-decoding function, only smaller capacities are made sufficient.

In addition, an image processing system according to the present embodiment is provided with the entire configuration of the image processing system according to Embodiment 1. In addition thereto, the image processing system according to the present embodiment is provided with the tile selecting unit 308 and the above-mentioned feature is added thereto.

Accordingly, since the image processing system according to the present embodiment has the features of the image processing system according to Embodiment 1, it can bring about effects similar to those of Embodiment 1.

(Embodiment 3)

The entire configuration of an image processing system according to Embodiment 3 of the invention is similar to the image processing system in Fig. 1. Therefore, Fig. 1 is used for the description of Embodiment 3.

The configuration of an image processing unit 30, shown in Fig. 1, of Embodiment 3 is also similar to that of the image processing unit in Fig. 6. Therefore, Fig. 6 is referred to for the description of Embodiment 3.

In addition, even in the description of Embodiment 3, as shown in Fig. 2, an example in which the image processing unit 30 in Fig. 1 is mounted in a mobile telephone is taken.

Accordingly, even in Embodiment 3, an example is taken, in which the display unit 31 is made into a liquid crystal display as in Embodiment 1, and a moving image display area is composed of 128 pixels by 96 pixels.

Also, the limiting condition of a frame rate of moving image is 15 fps or more. The decoding capacity of the decoding unit 301 is 1485 (macroblocks per second), which is regulated in Simple@L1 Profile. The decoding capacity of the decoding unit 302 is the same as the above.

Hereinafter, a description of parts that are common to those in Embodiment 1 is omitted. A description is given, focusing on parts that are different from those of Embodiment 1.

A point in which Embodiment 3 differs from Embodiment 1 resides in a division system using the dividing unit 11. Other points are similar to those of Embodiment 1. Hereinafter, a detailed description is given thereof.

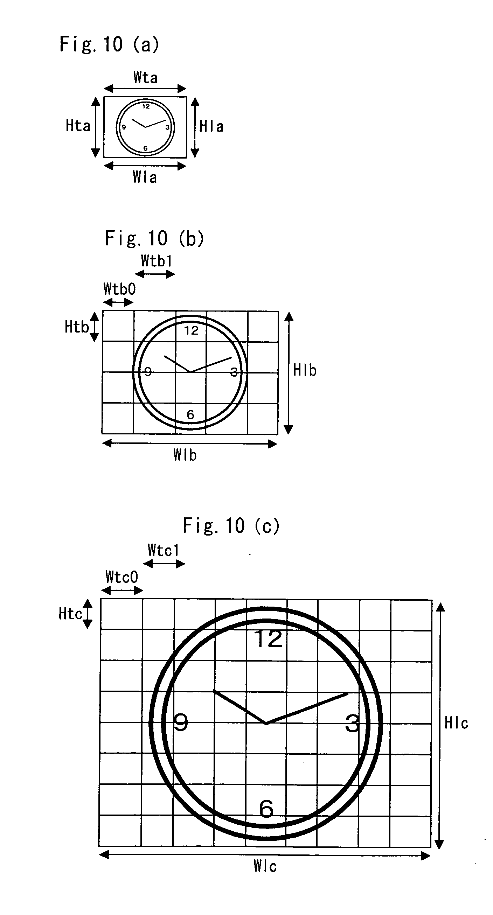

Fig. 10 illustrates a division system using the dividing unit 11 in Fig. 1, according to Embodiment 3 of the present invention.

Fig. 10 (a) is a view illustrating a moving image having resolution (a), Fig. 10 (b) is a view illustrating a moving image having resolution (b), and Fig. 10 (c) is a view illustrating a moving image having resolution (c).

In Fig. 10, three moving images are used, which have same content and aspect, but different resolutions.

As shown in Fig. 10 (a), the moving image having the resolution (a) is composed of 128 pixels (W1a) in the horizontal direction and 96 pixels (H1a) in the vertical direction.

The moving image having the resolution (a) is not subjected to a dividing process by the dividing unit 11. That is, the moving image having the resolution (a) is one tile of Wta=W1a in the horizontal direction and Hta=H1a in the vertical direction.

The moving image having the resolution (a), which is one tile, is encoded by the encoding process unit 12. The moving image having the resolution (a), which is one tile, is composed of a single encoded bit stream.

As shown in Fig. 10 (b), a moving image having the resolution (b) is composed of 256 pixels (W1b) in the horizontal direction and 192 pixels (H1b) in the vertical direction.

The dividing unit 11 divides the moving image having the resolution (b) into tiles having two width types.

As a result, the divided moving image having the resolution (b) takes a structure, in which two types of tiles each having a different width are laid alternately.

In detail, in the moving image having the resolution (b), the tile located in the extreme left column has a width Wtb0 that is the same as that of three macroblocks (48 pixels).

On the other hand, the tile located at the second column has the same width Wtb1 as four macroblocks (64 pixels) as in Embodiments 1 and 2.

Hereinafter, tiles of narrow width Wtb0 and tiles of wide width Wtb1 are alternately arranged. The height Htb is the same for all the tiles.

Thus, the moving image having the resolution (b), which is divided into sixteen tiles, are encoded tile by tile by the encoding process unit 12. The sixteen tiles are composed of sixteen encoded bit streams.

As shown in Fig. 10 (c), the moving image having the resolution (c) is composed of 512 pixels (W1c) in the horizontal direction and 384 pixels (H1c) in the vertical direction.

The dividing unit 11 divides the moving image having the resolution (c) into tiles having two width types.

As a result, the divided moving image having the resolution (c) takes a structure in which two types of tiles each having a different width are laid alternately. However, the order of the tiles is replaced in comparison with the moving image having the resolution (b).

In detail, in the moving image having the resolution (c), the tile located in the extremely left column has the same width Wtc0 as that of the four macroblocks (64 pixels).

On the other hand, the tile located in the second column has the same width Wtc1 as that of the three macroblocks (48 pixels).

Hereinafter, tiles having a wide width Wtc0 and tiles having a narrow width Wtc1 are alternately arranged. Also, the height Htc is the same in all the tiles.

Thus, the moving image having the resolution (c), which is divided into 64 tiles, are encoded tile by tile by the encoding process unit 12. The 64 tiles are composed of encoded 64 bit streams.

Also, as has been easily understood in Fig. 10, the resolution (b) is finer by two times than the resolution (a), and the resolution (c) is finer by four times than the resolution (a).

The encoded moving image data having resolutions (a) and (b) as described above are stored in the image storage unit 13.

The image storage unit 13 prepares image-related information on the basis of data (image management data) to manage the stored moving image data (bit streams) as in Embodiment 1. The data structure of the image management data is similar to that in Fig. 5.

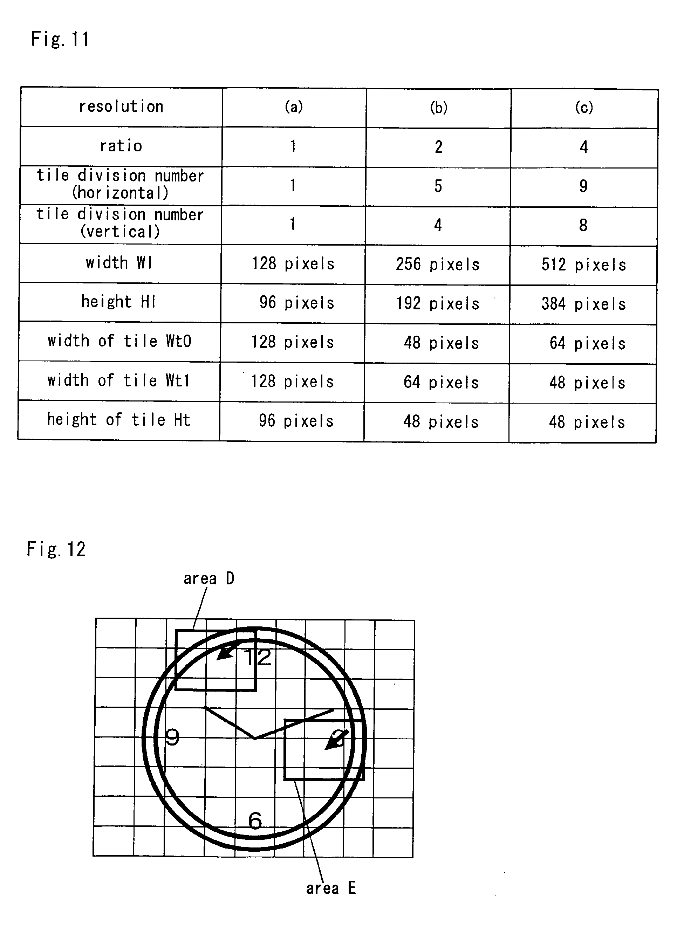

Fig. 11 is a table illustrating the image-related information generated by the image storage unit 13 in Fig. 1 according to Embodiment 3.

The image-related information shown in Fig. 11 is prepared with respect to the moving image having the resolutions (a) through (c) shown in Fig. 10.

In Fig. 11, with respect to the moving image having the resolution (a), width W1 is equal to W1a (W1=W1a), height H1 is equal to H1a (H1=H1a), tile width Wt0 is equal to Wt1 or Wta (Wt0=Wt1=Wta), and tile height Ht is equal to Hta (Ht=Hta).

In Fig. 11, with respect to the moving image having the resolution (b), width W1 is equal to W1b (W1=W1b), height H1 is equal to H1b (H1=H1b), tile width Wt0 is equal to Wtb0 (Wt0=Wtb0), tile width Wt1 is equal to Wtb1, and tile height Ht is equal to Htb (Ht=Htb).

In Fig. 11, with respect to the moving image having the resolution (c), width W1 is equal to W1c (W1=W1c), height H1 is equal to H1c (H1=H1c), tile width Wt0 is equal to Wtc0 (Wt0=Wtb0), tile width Wt1 is equal to Wtc1, and tile height Ht is equal to Htc (Ht=Htc).

In the case where the display area of moving images is arbitrarily changed since the moving images having resolutions (b) and (c) are divided by such a division system, the limiting condition (15 fps) can be satisfied in the range of the decoding capacity (1485 macroblocks per second) which is regulated in Simple@L1 Profile. This point is described, using a detailed example.

Fig. 12 is a view describing a decoding process amount of the image processing unit 30 according to the present embodiment. Fig. 12 shows the same moving image as the moving image having the resolution (c) shown in Fig. 10 (c), and the division system is the same.

In Fig. 12, area D is an area including large tiles while area E is an area including small tiles. Both areas D and E, respectively, include nine tiles.

In the present embodiment, even where the display area displayed in the display unit 31 is the area D or area E, it is possible to meet the limiting condition (15 fps) in the range of the decoding capacity (1485 macroblocks per second), which is regulated in Simple@L1 Profile. This point is considered in detail.

First, the number of macroblocks of the area D and the frame rate thereof are calculated.

Large tiles included in the area D are six, and each of the large tiles is composed of 4 x 3 macroblocks.

On the other hand, small tiles included in the area D are three, and each of the small tiles is composed of 3 x 3 macroblocks. Therefore, the number of macroblocks in the area D becomes as shown by the following expression.

[Expression 2]

$$(4 \times 3 \times 6) + (3 \times 3 \times 3) = 99 \text{ [macroblocks]}$$

Since the respective decoding capacities of the decoding units 301 and 302 are 1485 macroblocks per second, the frame rate in executing the decoding of the area D becomes as shown by the following expression.

[Expression 3]

$$1485 \text{ [macroblocks/s]} /99 \text{ [macroblocks/frame]}$$

$$=15 \text{ [fps]}$$

Next, the number of macroblocks of the area E and frame rate thereof are calculated.

Large tiles included in the area E are three, and each of the large tiles is composed of 4 x 3 macroblocks.

On the other hand, small tiles included in the area E are six, and each of the small tiles is composed of 3 x 3 macroblocks. Therefore, the number of macroblocks in the area E becomes as shown by the following expression.

[Expression 4]

$$(4 \times 3 \times 3) + (3 \times 3 \times 6) = 90 \text{ [macroblocks]}$$

Since the respective decoding capacities of the decoding units 301 and 302 are 1485 macroblocks per second, the frame rate in executing the decoding of the area E becomes as shown by the following expression.

[Expression 5]

1485 [macroblocks/s] /90 [macroblocks/frame]

=16.5 [fps]

As shown in [Expression 3] and [Expression 5], it can be understood that either case meets the limiting condition of 15 fps.

Thus, in the present embodiment, the limiting condition can be satisfied even in the case where the display area of the moving image is arbitrarily changed.

Because, even where the display area in the moving images is arbitrarily changed since respective frames of the moving image are divided into tiles having different sizes alternately, the amount of information of the minimum number of tiles including the display area is decreased at a display area at any position in comparison with the case where the frames are divided into tiles of the same size.

As a result, an arbitrarily selected area of respective frames of moving images stored in the image storage unit can be displayed without lowering the frame rate and specially preparing a decoding unit having more intensive performance than a general decoding unit 13.

That is, it becomes possible to enlarge, reduce, and scroll an arbitrarily selected area in the moving images without lowering the frame rate and specially preparing a decoding unit having more intensive performance than a general decoding unit.

This enables enlargement, reduction or scrolling centering on a focused point (pixel (focused pixel) assigned by a cursor) in the moving image display area of the display unit 31.

For this reason, when enlarging, reducing or scrolling the moving image displayed in the display unit 31, the operation can be carried out by a user easily and intuitively.

Also, in the present embodiment, a moving image having resolution (a), the size of which does not exceed the moving image display area of the display unit 31, is not divided by the dividing unit 11, but is encoded by the encoding process unit 12. (See Fig. 10 (a)).

Therefore, the moving image having resolution (a) is freed from any overhead due to a dividing process by the dividing unit 11, wherein the processing load can be decreased as a whole.

In addition, an image processing system according to the present embodiment is provided with all the features of the image processing system according to Embodiment 1.

Accordingly, since the image processing system according to the present embodiment has the features of the image processing system according to Embodiment 1, effects similar to those of Embodiment 1 can be brought about.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

**Claims**

1. An image processing apparatus that acquires a moving image from an image storage unit(13), which stores sets of encoded moving images of the same content but with a plurality of different resolutions, through a transmission line, and decodes the acquired moving image; comprising:

   a code input unit(300) operable to acquire said moving image from said image storage unit(13), and
   a decoding unit(301) operable to decode said moving image acquired by said code input unit(300) from said image storage unit(13);

   wherein, with respect to a moving image of a prescribed resolution among said moving images of the same content but with the plurality of different resolutions, respective frames thereof are segmented into a plurality of areas, and each of the segmented areas is encoded to generate a bit stream.

2. The image processing apparatus as set forth in Claim 1, wherein said code input unit(300) acquires a minimum number of bit streams for the segmented areas that include an area to be displayed on a moving image display area, from said image storage unit(13), which stores sets of said moving images.

3. The image processing apparatus as set forth in Claim 1, wherein two sets of said decoding unit(301)(302) are provided, as a first decoding unit(301) and a second decoding unit(302);

said first decoding unit decodes(301) a moving image that is displayed on a moving image display area; and

said second decoding unit(302) decodes a moving image of a lower resolution than that of the moving image displayed on the moving image display area; and

wherein said image processing apparatus is further provided with a resolution converting unit(303) that, in response to a display mode changing instruction for changing the display mode of the moving image presently displayed on the moving image display area, acquires and enlarges a part of an area from each of frames of the moving image of the lower resolution, which is decoded by said second decoding unit(302).

4. The image processing apparatus as set forth in Claim 3, further comprising an image selecting unit(304), and when an instruction for enlarging a moving image, which is presently displayed in the moving image display area, is issued as the display mode changing instruction,

said resolution converting unit(303) acquires a part of an area of each of frames of a decoded moving image from said decoding unit(302) that has decoded the moving image displayed at present, and carries out an enlargement process;

said code input unit(300) acquires a moving image, which has a higher resolution than that of the moving image displayed at present, from the image storage unit(13);

said decoding unit(301), which is different from said decoding unit(302) that has decoded the moving image displayed at present, decodes the moving image having the higher resolution, which has been acquired by said code input unit(300); and

said image selecting unit(304) selects the part of the area, to which the enlargement process has been applied by said resolution converting unit(303), and outputs the same until the decoding of the moving image having the higher resolution is completed, and, after the moving image having the higher resolution is completely decoded, selects and outputs the moving image having the higher resolution.

5. The image processing apparatus as set forth in Claim 3, further comprising an image selecting unit(304), and when a reduction instruction for reducing a moving image displayed at present in the moving image display area is issued as the display mode changing instruction,

said image selecting unit(304) selects a moving image having a lower resolution, which has been decoded by said decoding unit(302) different from said other decoding unit(301) that has decoded the moving image displayed at present, and outputs the same;

said code input unit(300) acquires a moving image having a lower resolution than that of the moving image decoded by said different decoding unit(302) from the image storage unit(13), unless the moving image that is decoded by said decoding unit(302) different from said other decoding unit(301) that has decoded the moving image displayed at present has the lowest resolution, and

said other decoding unit(301) that has decoded the moving image displayed at present decodes the moving image having the lower resolution, which has been acquired by said code input unit(300).

6. The image processing apparatus as set forth in Claim 3, further comprising an image selecting unit, and when a display area altering instruction for displaying an arbitrarily selected area other than an area displayed at present in the moving image display area with the same resolution as that of the moving image displayed at present is issued, as the display mode changing instruction,

said resolution converting unit(303) acquires a part of an area of each of frames of a decoded moving image, which is an area corresponding to the area specified by the display area altering instruction, from said decoding unit(302) differing from said other decoding unit(301) that has decoded the moving image displayed at present, and carries out an enlargement process;

said code input unit(300) acquires a moving image of the area specified by the display area altering instruction from the image storage unit(13), the moving image of the specified area having the same resolution as that of the moving image displayed at present;

said decoding unit(301) that has decoded the moving image displayed at present decodes the moving image of the specified area, which is acquired by said code input unit(300); and

said image selecting unit(304) selects the part of the area, which is enlarged by said resolution converting unit, outputs the same until the decoding of the moving image of the assigned area is completed, and, after the decoding of the moving image of the assigned area is completed, selects and outputs the completely decoded moving image.

7. The image processing apparatus as set forth in Claim 3, wherein the display mode changing instruction is carried out by specifying at least a pixel of the moving image display area, and the display mode is altered in compliance with the display mode changing instruction centering on the specified pixel.

8. The image processing apparatus as set forth in Claim 3, wherein said first decoding unit(301) and said second decoding unit(302) are composed as a single decoding process unit, and the single decoding process unit decodes moving images having resolutions different from each other by time-sharing.

9. The image processing apparatus as set forth in Claim 1, in which said two decoding units are provided, and said respective decoding units decode moving images having resolutions differing from each other; further comprising:

a segmented area selecting unit(308) operable to select at least the segmented area from a minimum number of the segmented areas, so that an area displayed in a moving image display area is maximized, that a processing amount required to decode is within the range of a processing capacity of said decoding unit, and that the number of the segmented areas is maximized, when it is instructed that an arbitrarily selected area of respective frames of the moving image stored in the image storage unit(13) is displayed in the moving image display area, but when a processing amount required to decode the minimum number of the segmented areas including the arbitrarily selected area exceeds the processing capacity of said decoding unit;
a resolution converting unit(303) operable to acquire a segment corresponding to the arbitrarily selected area included in the segmented area but not selected by said segmented area selecting unit(308), from a moving image decoded by said decoding unit that is different from said other decoding unit for decoding the segmented area selected by said segmented area selecting unit(308), and convert the segment corresponding to the arbitrarily selected area to one having the same resolution as the resolution of the segmented area selected by said segmented area selecting unit(308);
an image selecting unit(304) operable to acquire a segment to be displayed in the moving image display area from the decoded segmented area selected by said segmented area selecting unit(308), and to combine to output the acquired segment and the segment whose resolution is converted by said resolution converting unit(303);
wherein said code input unit(300) acquires the segmented area, which is selected by said segmented area selecting unit(308), from said moving image storage unit(13); and one of said two decoding units decodes the segmented area that is selected by said segmented area selecting unit(308) and acquired by said code input unit(300).

10. The image processing apparatus as set forth in Claim 9, wherein
a first decoding unit(301) that is one of said two decoding units decodes a moving image to be displayed in the moving image display area;
a second decoding unit(302) which is the other of said two decoding units decodes a moving image having a lower resolution than that of the moving image displayed in the moving image display area; and
said resolution converting unit(303) acquires and enlarges a part of an area from each of frames of the moving image having the lower resolution, which is decoded by said second decoding unit(302), in response to a display mode changing instruction for altering the display mode of the moving image presently displayed in the moving image display area.

11. The image processing apparatus as set forth in Claim 10, wherein the display mode changing instruction is carried out by specifying at least a pixel of the moving image display area, and changing the display mode of the moving image around the assigned pixel based on the display mode changing instruction.

12. The image processing apparatus as set forth in Claim 10, wherein said first decoding unit(301) and said second decoding unit(302) are composed as a single decoding process unit, and the single decoding process unit decodes moving images having resolutions differing from each other by time-sharing.

13. A decoding device that acquires a moving image from an image storage unit(13), which stores sets of encoded moving images of the same content but with a plurality of different resolutions, through a transmission line, and displays the decoded moving image; comprising:

a code input unit(300) operable to acquire the moving image from said image storage unit(13);
a decoding unit(301) operable to decode the moving image that is acquired by said code input unit(300) from said image storage unit(13); and
a display unit(31) operable to display the moving image decoded by said decoding unit(301);

wherein, with respect to a moving image of a prescribed resolution among the moving images of the same content but with the plurality of different resolutions, respective frames thereof are segmented into a plurality of areas and each of the segmented areas is encoded to generate a bit stream.

**14.** The decoding device as set forth in Claim 13, wherein two sets of said decoding unit are provided, as a first decoding unit(301) and a second decoding unit(302);

said first decoding unit(301) decodes a moving image to be displayed in said display unit(31);

said second decoding unit(302) decodes a moving image having a lower resolution than that of the moving image displayed in said display unit(31); and

further comprising: a resolution converting unit(303) operable to acquire a part of an area from each of frames of the moving image having the lower resolution, which is decoded by said second decoding unit(302), in response to a display mode changing instruction for altering the display mode of the moving image presently displayed in said display unit(31), and enlarge the part of the area.

**15.** The decoding device as set forth in Claim 13, in which said two decoding units are provided, and said respective decoding units decode moving images having resolutions differing from each other; further comprising:

a segmented area selecting unit(308) operable to select at least the segmented area from a minimum number of the segmented areas so that an area displayed in said display unit(31) is maximized, that a processing amount required to decode is within the range of a processing capacity of said decoding unit, and that the number of said part areas is maximized, when it is instructed that an arbitrarily selected area of respective frames of the moving image stored in the image storage unit is displayed in said display unit(31), but when a processing amount required to decode the minimum number of the segmented areas including the arbitrarily selected area exceeds the processing capacity of said decoding unit;

a resolution converting unit(308) operable to acquire a segment corresponding to the arbitrarily selected area included in the segmented area but not selected by said part area selecting unit(308), from a moving image decoded by said decoding unit that is different from said other decoding unit for decoding the part area selected by said part area selecting unit(308), and convert the segment corresponding to the arbitrarily selected area to one having the same resolution as the resolution of the part area selected by said part area selecting unit (308);

an image selecting unit(304) operable to acquire a segment to be displayed in said display unit(31) from the decoded segmented area selected by said segmented area selecting unit(308), and to combine to output the acquired segment and the segment whose resolution is converted by said resolution converting unit(303);

wherein said code input unit(300) acquires the segmented area, which is selected by said segmented area selecting unit(308), from said moving image storage unit(13); and one of said two decoding units decodes the segmented area that is selected by said segmented area selecting unit(308) and acquired by said code input unit(300).

**16.** The decoding device as set forth in Claim 15, wherein

a first decoding unit(301) that is one of said two decoding units decodes a moving image to be displayed in said display unit(31);

a second decoding unit(302) which is the other of said two decoding units decodes a moving image having a lower resolution than that of the moving image to be displayed in said display unit(31); and

said resolution converting unit(303) acquires and enlarges a part of an area from each of frames of the moving image having the lower resolution, which is decoded by said second decoding unit(302), in response to a display mode changing instruction for altering the display mode of the moving image presently displayed in said display unit(31).

**17.** An encoding device comprising:

a dividing unit(11) operable to segment respective frames of an inputted moving image into a plurality of segmented areas;

an encoding process unit(12) operable to encode inputted moving images each having a different resolution; and

an image storage unit(13) operable to store the encoded moving images each having the different resolution; and

wherein said encoding process unit(12) encodes the moving image segmented by said dividing unit(11) and generates a bit stream for each of the segmented areas.

**18.** The encoding device as set forth in Claim 17, wherein said dividing unit( 11) inputs a moving image, whose frames have a larger resolution than that of a moving image display area, and segments the respective frames of the moving image into segmented areas.

**19.** The encoding device as set forth in Claim 17, wherein a moving image having a resolution, with which the moving image does not exceed in size a moving image display area in which the moving image is to be displayed, is not segmented by said dividing unit(11), but encoded by said encoding process unit(12).

**20.** The encoding device as set forth in Claim 17, wherein said dividing unit(11) segments the respective frames of the inputted moving image into the segmented areas whose size is equal to a moving image display area.

**21.** The encoding device as set forth in Claim 17, wherein said dividing unit(11) segments the respective frames of the inputted moving image into the segmented areas that are smaller than a moving image display area.

**22.** The encoding device as set forth in Claim 17, wherein said dividing unit(11) segments the respective frames of the inputted moving image into the segmented areas whose size is one of integral fractions of the size of a moving image display area.

**23.** The encoding device as set forth in Claim 17, wherein said dividing unit(11) segments the respective frames of the moving image having a resolution other than the moving image having a minimum resolution into the segmented areas whose size is equal to the size of the frames of the moving image having the minimum resolution.

**24.** The encoding device as set forth in Claim 17, wherein the segmented areas are rectangular, and said dividing unit (11) segments the respective frames of the inputted moving image into rectangular areas of a fixed size previously defined per resolution.

**25.** The encoding device as set forth in Claim 17, wherein the segmented areas are rectangular, and said dividing unit (11) segments the respective frames of the inputted moving image into rectangular areas of a different size alternately.

**26.** The encoding device as set forth in Claim 17, wherein an encoding system, according to which said encoding process unit(12) operates, complies with MPEG-4 standards.

**27.** An image processing system, comprising:

  a decoding device described in Claim 13; and
  an encoding device described in Claim 17.

**28.** An image processing system, comprising:

  a decoding device described in Claim 14; and
  an encoding device described in Claim 17.

**29.** An image processing system, comprising:

  a decoding device described in Claim 15; and
  an encoding device described in Claim 17.

**30.** An image processing system, comprising:

  a decoding device described in Claim 16; and
  an encoding device described in Claim 17.

**31.** An image processing system, comprising:

  a decoding device described in Claim 13; and
  an encoding device described in Claim 25.

**32.** An image processing system, comprising:

a decoding device described in Claim 14; and
an encoding device described in Claim 25.

**33.** An image processing method comprising the steps of;
selecting and acquiring at least a moving image from the sets of encoded moving images of the same content but with a plurality of different resolutions,; and
encoding the moving image acquired by said acquiring step;
wherein, with respect to a moving image of a prescribed resolution among the moving images, which have the same content but a plurality of different resolutions, respective frames are segmented into a plurality of segmented areas, and are encoded to generate a bit stream for each of the segmented areas.

**34.** The image processing method as set forth in Claim 33, further comprising the step of acquiring and enlarging a part of an area from the respective frames of the moving image having a lower resolution, which is decoded by said decoding step, in response to a display mode changing instruction for altering the display mode of the moving image presently displayed in a moving image display area;
wherein said decoding steps comprise the steps of;
decoding the moving image displayed in the moving image display area; and
decoding the moving image having the lower resolution than that of the moving image displayed in the moving image display area.

**35.** An encoding method comprising the steps of;
segmenting respective frames of an inputted moving image into a plurality of segmented areas; and
encoding inputted moving images having a plurality of different resolutions;
wherein said encoding step executes an encoding process for each of the segmented areas, which are segmented by said segmenting step, to generate a series of bit streams.

**36.** The encoding method as set forth in Claim 35, wherein the segmented areas are rectangular, and said div segmenting step segments the respective frames of the inputted moving image into rectangular areas each having a different size alternately.

Fig. 1

encoding device 1

dividing unit —— 11

↓

encoding process unit —— 12

↓

image storage unit —— 13

↓ ↑

transmission line —— 2

↓ ↑

image processing unit —— 30

↓ ↑

display unit | input unit —— 32

decoding device 3

31

Fig. 2

transmission line 2

1

3
31
32

network

20      21

34

Fig. 3 (a)

Fig. 3 (b)

Fig. 3 (c)

Fig. 4

| resolution | (a) | (b) | (c) |
|---|---|---|---|
| ratio | 1 | 2 | 4 |
| tile division number (horizontal) | 2 | 4 | 8 |
| tile division number (vertical) | 2 | 4 | 8 |
| width Wl | 128 pixels | 256 pixels | 512 pixels |
| height Hl | 96 pixels | 192 pixels | 384 pixels |
| width of tile Wt | 64 pixels | 64 pixels | 64 pixels |
| height of tile Ht | 48 pixels | 48 pixels | 48 pixels |

Fig. 5

respective bit streams

bit stream [0,0]

bit stream [1,0]

bit stream [0,1]

bit stream [1,1]

bit stream pointer portion

| item | value |
|---|---|
| pointer to [0,0] | |
| pointer to [1,0] | |
| pointer to [0,1] | |
| pointer to [1,1] | |

level data portion

| item | value |
|---|---|
| resolution level | (a) |
| ratio | 1 |
| tile division number (horizontal) | 2 |
| tile division number (vertical) | 2 |
| width Wl | 128 |
| height Hl | 96 |
| width of tile Wt | 64 |
| height of tile Ht | 48 |
| BS pointer | |

• • •

header portion

| item | value |
|---|---|
| number of resolution levels | 3 |
| pointer to (a) | |
| pointer to (b) | |
| pointer to (c) | |

Fig. 6

Fig. 7(a)

| | decoding unit 301 | decoding unit 302 | resolution converting unit | moving image display |
|---|---|---|---|---|
| time T1 | * (a) [0, 0] [1, 0] [0, 1] [1, 1] | not operate | not operate | |

enlargement instruction

Fig. 7(b)

| | decoding unit 301 | decoding unit 302 | resolution converting unit | moving image display |
|---|---|---|---|---|
| time T2 | * (a) [0, 0] [1, 0] [0, 1] [1, 1] | (b) start [1, 0] [2, 0] [1, 1] [2, 1] | decoding unit 301 (32, 0) - (95, 47) * two times enlargement | |

Fig. 7(c)

| | decoding unit 301 | decoding unit 302 | resolution converting unit | moving image display |
|---|---|---|---|---|
| time T3 | (a) [0, 0] [1, 0] [0, 1] [1, 1] | * (b) [1, 0] [2, 0] [1, 1] [2, 1] | not operate | |

enlargement instruction

Fig. 7(d)

| | decoding unit 301 | decoding unit 302 | resolution converting unit | moving image display |
|---|---|---|---|---|
| time T4 | (c) start [3, 0] [4, 0] [3, 1] [4, 1] | * (b) [1, 0] [2, 0] [1, 1] [2, 1] | decoding unit 302 (32, 0) - (95, 47) * two times enlargement | |

Fig. 7(e)

| | decoding unit 301 | decoding unit 302 | resolution converting unit | moving image display |
|---|---|---|---|---|
| time T5 | * (c) [3, 0] [4, 0] [3, 1] [4, 1] | (b) [1, 0] [2, 0] [1, 1] [2, 1] | not operate | 12 |

reduction instruction

Fig. 7(f)

| | decoding unit 301 | decoding unit 302 | resolution converting unit | moving image display |
|---|---|---|---|---|
| time T6 | (a) start [0, 0] [1, 0] [0, 1] [1, 1] | * (b) [1, 0] [2, 0] [1, 1] [2, 1] | not operate | 12 |

scroll instruction

Fig. 7(g)

| | decoding unit 301 | decoding unit 302 | resolution converting unit | moving image display |
|---|---|---|---|---|
| time T7 | * (a) [0, 0] [1, 0] [0, 1] [1, 1] | (b) start [2, 1] [2, 2] [3, 1] [3, 2] | decoding unit 301 (64, 24)−(127, 71) * two times enlargement | 3 |

Fig. 7(h)

| | decoding unit 301 | decoding unit 302 | resolution converting unit | moving image display |
|---|---|---|---|---|
| time T8 | (a) [0, 0] [1, 0] [0, 1] [1, 1] | * (b) [2, 1] [2, 2] [3, 1] [3, 2] | not operate | 3 |

Fig. 8

Fig. 9

area B    area A

12

9    3

6

area C

Fig. 10 (a)

Fig. 10 (b)

Fig. 10 (c)

Fig. 11

| resolution | (a) | (b) | (c) |
|---|---|---|---|
| ratio | 1 | 2 | 4 |
| tile division number (horizontal) | 1 | 5 | 9 |
| tile division number (vertical) | 1 | 4 | 8 |
| width WI | 128 pixels | 256 pixels | 512 pixels |
| height HI | 96 pixels | 192 pixels | 384 pixels |
| width of tile Wt0 | 128 pixels | 48 pixels | 64 pixels |
| width of tile Wt1 | 128 pixels | 64 pixels | 48 pixels |
| height of tile Ht | 96 pixels | 48 pixels | 48 pixels |

Fig. 12

area D

area E